(19) Europäisches Patentamt
European Patent Office
Office européen des brevets

(11) EP 3 819 322 A1

(12) **EUROPEAN PATENT APPLICATION**

(43) Date of publication:
**12.05.2021 Bulletin 2021/19**

(21) Application number: **20206099.2**

(22) Date of filing: **06.11.2020**

(51) Int Cl.:
***C08G 18/24*** *(2006.01)* ***C08G 18/44*** *(2006.01)*
***C08G 18/73*** *(2006.01)* ***C09D 175/06*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.11.2019 JP 2019201259**

(71) Applicant: **Asahi Kasei Kabushiki Kaisha**
**Tokyo 1000006 (JP)**

(72) Inventor: **Kawai, Yasufumi**
**Tokyo, 100-0006 (JP)**

(74) Representative: **Strehl Schübel-Hopf & Partner**
**Maximilianstrasse 54**
**80538 München (DE)**

(54) **METHOD FOR PRODUCING POLYURETHANE COATING FILM AND COATING MATERIAL COMPOSITION**

(57) An object of the present invention is to provide a method for producing a polyurethane coating film which can produce a coating film excellent in physical properties, and a coating material composition which can produce a coating film excellent in physical properties. The method for producing a polyurethane coating film according to the present invention comprises: a mixing step of mixing component (A): a polyol composition and component (B): an isocyanate composition to obtain a coating material composition; an application step of applying the coating material composition; and a drying step of drying the applied coating material composition to obtain a coating film, wherein a drying time in the drying step is within 60 minutes after the application. The coating material composition of the present invention comprises component (A): a polyol composition and component (B): an isocyanate composition, wherein a baking time (drying time) until any finger mark is no longer left in finger touch evaluation is within 60 minutes.



Printed by Jouve, 75001 PARIS (FR)

## Description

Technical Field

The present invention relates to a method for producing a polyurethane coating film and a coating material composition.

Background Art

Polyurethane resins have heretofore been used in a wide range of fields such as synthetic leather, artificial leather, adhesives, coating materials for furniture, and coating materials for automobiles. Of starting materials of the polyurethane resins, polyether, polyester, and polycarbonate are used as polyol components to be reacted with isocyanate. However, in recent years, there has been a growing demand for the resistance, such as heat resistance, weather resistance, hydrolysis resistance, solvent resistance, sunscreen resistance, or scratch resistance, of polyurethane resins.

In general, a polyurethane resin obtained using polycarbonate diol as a polyol component is known to be superior in moist heat resistance, solvent resistance, sunscreen resistance, scratch resistance, etc. to a polyurethane resin obtained using polyether or polyester. For example, Patent Document 1 discloses polycarbonate diol obtained using 1,5-pentanediol and 1,6-hexanediol as diol components. For example, Patent Document 2 discloses polycarbonate diol obtained using 1,4-butanediol and 1,6-hexanediol.

List of Prior Art Documents

Patent Document

Patent Document 1: International Publication No. WO 2001/90213
Patent Document 2: International Publication No. WO 2009/063767

Summary of Invention

Problems to be Solved by Invention

Even coating material compositions obtained using polycarbonate diol may not produce expected physical properties of coating films, depending on curing conditions of the coating material compositions. Patent Document 1 and Patent Document 2 described above have no mention about proper curing conditions, and thus are still susceptible to improvement.

Accordingly, an object of the present invention is to provide a method for producing a polyurethane coating film which can produce a coating film excellent in physical properties, and a coating material composition which can produce a coating film excellent in physical properties.

Means for Solving Problems

The present inventor has conducted diligent studies to solve the above-mentioned problem, consequently found that a coating film excellent in physical properties can be obtained by setting a drying time for forming the coating film to a specific range, and completed the present invention.

Specifically, the present invention is configured as follows.

[1] A method for producing a polyurethane coating film, comprising:

a mixing step of mixing component (A): a polyol composition and component (B): an isocyanate composition to obtain a coating material composition;
an application step of applying the coating material composition; and
a drying step of drying the applied coating material composition to obtain a coating film, wherein
a drying time in the drying step is within 60 minutes after the application.

[2] The method for producing the polyurethane coating film according to [1], wherein the component (A) has a structure represented by the following (A-I):

$$-\left(R^1-O-CO-O\right)_a- \quad \ldots \text{(A-I)}$$

wherein $R^1$ is a divalent linear, branched or cyclic aliphatic, or aromatic hydrocarbon group having 2 or more and 20 or less carbon atoms, and a plurality of $R^1$ moieties are the same as or different from each other; and a is the number of 1 or larger and 50 or smaller.

[3] The method for producing the polyurethane coating film according to [2], wherein the component (A) contains 50% by mass or more and 95% by mass or less of the structure represented by (A-I).

[4] The method for producing the polyurethane coating film according to any of [1] to [3], wherein the component (A) has a structure represented by the following general formula (I):

$$-\left(R^{11}-O\right)_{n11}- \quad \ldots \text{(I)}$$

wherein $R^{11}$ is a divalent linear, branched or cyclic aliphatic, or aromatic hydrocarbon group having 2 or more and 20 or less carbon atoms, and a plurality of $R^{11}$ moieties are the same as or different from each other; and n11 is the number of 7 or larger and 70 or smaller.

[5] The method for producing the polyurethane coating film according to [4], wherein the component (A) contains 5% by mass or more and 50% by mass or less of the structure represented by the general formula (I).

[6] The method for producing the polyurethane coating film according to [4] or [5], wherein the structure represented by the general formula (I) is a polyoxyethylene structure.

[7] The method for producing the polyurethane coating film according to [4] or [5], wherein based on the total mass of the structure represented by the general formula (I), a content of an oxy-1-methylethylene group is 10% by mass or more and 100% by mass or less, and a content of an oxyethylene group is 0% by mass or more and 90% by mass or less.

[8] The method for producing the polyurethane coating film according to any of [1] to [7], wherein a hydroxy value of the component (A) is 10 to 400 mg-KOH/g.

[9] The method for producing the polyurethane coating film according to any of [1] to [8], wherein an average number of NCO functional groups of the component (B) is 2.0 or more.

[10] The method for producing the polyurethane coating film according to any of [1] to [9], wherein a mole number of a hydroxy group (OH group) contained in the component (A) and a mole number of an isocyanate group (NCO group) contained in the component (B) satisfy a relationship of the following expression 1:

the mole number of the NCO group / the mole number of the OH group = 0.2 to 7.0 (expression 1).

[11] A coating material composition comprising component (A): a polyol composition and component (B): an isocyanate composition, wherein a baking time (drying time) until any finger mark is no longer left in the following finger touch evaluation is within 60 minutes: [finger touch evaluation]

the coating material composition is used, and applied onto a polycarbonate plate (2 mm × 70 mm × 150 mm) such that a dry film thickness is a thickness of 40 μm, and the applied coating material composition is baked at 60°C to obtain a polyurethane coating film; and in this step, the baking time (drying time) until any finger mark is no longer left on the surface is measured after the application.

[12] The coating material composition according to [11], wherein a mole number of a hydroxy group (OH group) contained in the component (A) and a mole number of an isocyanate group (NCO group) contained in the component (B) satisfy a relationship of the following expression 1:

the mole number of the NCO group / the mole number of the OH group = 0.2 to 7.0 (expression 1).

[13] The coating material composition according to [11] or [12], wherein a hydroxy value of the component (A) is 10 to 400 mg-KOH/g.

[14] The coating material composition according to any of [11] to [13], wherein an average number of NCO functional groups of the component (B) is 2.0 or more.

[15] The coating material composition according to any of [11] to [14], wherein the component (A) contains a carbonate group.

[16] The coating material composition according to any of [11] to [15], wherein the component (A) has a structure represented by the following (A-I):

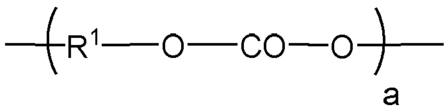
... (A-I)

wherein $R^1$ is a divalent linear, branched or cyclic aliphatic, or aromatic hydrocarbon group having 2 or more and 20 or less carbon atoms, and a plurality of $R^1$ moieties are the same as or different from each other; and a is the number of 1 or larger and 50 or smaller.

[17] The coating material composition according to any of [11] to [16], wherein the component (A) contains the following component (A1):

component (A1): a polycarbonate diol composition comprising a structure represented by the following general formula (I) and a polycarbonate structure represented by the following formula (A-I), the polycarbonate diol composition having hydroxy groups at both ends and having a hydroxy value of 10 to 400 mg-KOH/g, wherein based on the total mass of the structure represented by the following general formula (I) and the polycarbonate structure represented by the following formula (A-I), a content of the structure represented by the following general formula (I) is 5% by mass or more and 50% by mass or less, and a content of the polycarbonate structure represented by the following formula (A-I) is 50% by mass or more and 95% by mass or less:

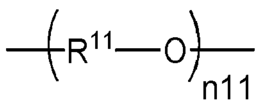
... (I)

wherein $R^{11}$ is a divalent linear, branched or cyclic aliphatic, or aromatic hydrocarbon group having 2 or more and 20 or less carbon atoms, and a plurality of $R^{11}$ moieties are the same as or different from each other; and n11 is the number of 7 or larger and 70 or smaller, and

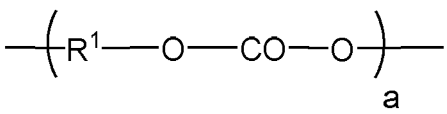
... (A-I)

wherein $R^1$ is a divalent linear, branched or cyclic aliphatic, or aromatic hydrocarbon group having 2 or more and 20 or less carbon atoms, and a plurality of $R^1$ moieties are the same as or different from each other; and a is the number of 1 or larger and 50 or smaller.

[18] The coating material composition according to [17], wherein the structure represented by the general formula (I) is a polyoxyethylene structure.

[19] The coating material composition according to [17], wherein based on the total mass of the structure represented by the general formula (I), a content of an oxy-1-methylethylene group is 10% by mass or more and 100% by mass or less, and a content of an oxyethylene group is 0% by mass or more and 90% by mass or less.

[20] The coating material composition according to any of [11] to [19], wherein the coating material composition is a solvent-based coating material composition.

[21] The coating material composition according to any of [11] to [19], wherein the coating material composition is an aqueous coating material composition.

[22] The coating material composition according to any of [11] to [19], wherein the coating material composition is a solvent-free coating material composition.

[23] A coating film obtained from the coating material composition according to any of [11] to [22].

Advantages of Invention

According to the present invention, a coating film excellent in physical properties can be obtained.

Mode for Carrying Out Invention

Hereinafter, the mode for carrying out the present invention (hereinafter, referred to as the "present embodiment") will be described in detail. The present invention is not limited by the description below and can be carried out with various modification or changes made therein without departing from the spirit of the present invention.

<Method for producing polyurethane coating film>

The method for producing the polyurethane coating film according to the present embodiment comprises:

a mixing step of mixing component (A): a polyol composition and component (B): an isocyanate composition to obtain a coating material composition;
an application step of applying the coating material composition; and
a drying step of drying the applied coating material composition to obtain a coating film, wherein
a drying time in the drying step is within 60 minutes after the application.

The method for producing the polyurethane coating film according to the present embodiment can produce a coating film excellent in physical properties by comprising such steps and controlling the drying time in the drying step within a specific range. Specifically, when the coating material composition is, for example, a transparent clear coating material composition, a coating film excellent in chemical resistance, scratch resistance and moist heat resistance can be obtained. When the coating material composition is, for example, a soft-feel coating material composition containing a flatting agent, a coating film excellent in sunscreen resistance and weather resistance can be obtained.

The reason is not clear why the physical properties of coating films expected from the design of coating material compositions are obtained by controlling the drying time in the drying step within a specific range. This is probably influenced largely by the cured states of the coating films. If the time to complete drying, i.e., the time required for the coating film to cure, is too long, isocyanate groups in the isocyanate composition serving as a curing agent disappear, mainly, due to moisture. Particularly, the coating film surface comes into first contact with moisture in the coating film structure and is therefore influenced largely by the moisture.

Since the coating film surface is favorably cured in a proper time by controlling the drying time in the drying step within a specific range, most of isocyanate groups in the isocyanate composition serving as a curing agent react with hydroxy groups in the polyol composition serving as a base agent before the isocyanate groups disappear. Therefore, it is considered that the physical properties of coating films expected from the design of coating material compositions can be obtained.

The cured state of the coating film surface can be confirmed by finger touch evaluation described in Examples mentioned later.

Examples of the method for controlling the drying time in the drying step within a specific range include, but are not particularly limited to, a method of adjusting the amount of a catalyst added to the coating material composition, and a method of appropriately selecting the types of the polyol composition (base agent) and the isocyanate composition (curing agent). Specifically, a larger amount of the catalyst added can shorten the drying time. A larger number of functional groups in the polyol composition (base agent) and/or the isocyanate composition (curing agent) can shorten the drying time.

[Mixing step]

In the method for producing the polyurethane coating film according to the present embodiment, the mixing step is the step of mixing the component (A) and the component (B), and optionally component (C): a solvent and/or component (D): other additives mentioned later to obtain a coating material composition.

Specific examples of the mixing method include, but are not particularly limited to, a method of stirring the components at a rotational speed of 50 rpm or more and 1000 rpm or less for 5 minutes or longer and 60 minutes or shorter using a stirrer or the like and then defoaming the mixture using a vacuum defoamer.

[Application step]

In the method for producing the polyurethane coating film according to the present embodiment, the application step is the step of applying the coating material composition.

The method for painting the coating material composition is not particularly limited. For example, a method is used which involves mixing the components immediately before painting, and then applying the mixture to a base material using a spray, a roll, a brush, or the like. Another possible method involves mixing the components other than the curing

agent component (B) in advance, adding the component (B) thereto immediately before application, and uniformly mixing these components, followed by application.

[Drying step]

In the method for producing a polyurethane coating film according to the present embodiment, the drying step is the step of drying the applied coating material composition to obtain a coating film.
The drying time in the drying step is preferably 5 minutes to 55 minutes, more preferably 10 minutes to 50 minutes after application, further preferably 15 minutes to 45 minutes after application, still further preferably 20 minutes to 30 minutes after application. When the drying time falls within the range described above, a coating film much superior in physical properties can be obtained.
The drying temperature in the drying step is preferably 40°C to 200°C, more preferably 50°C to 175°C, further preferably 60°C to 150°C, still further preferably 60°C to 120°C, particularly preferably 60°C to 100°C.
Examples of the drying method in the drying step include, but are not particularly limited to, spontaneous drying, forced drying, and drying by heating.
In the method for producing the polyurethane coating film according to the present embodiment, the thickness of the coating film obtained after the drying is preferably 1 μm to 100 μm, more preferably 2 μm to 90 μm, further preferably 3 μm to 80 μm, still further preferably 5 μm to 50 μm, particularly preferably 10 μm to 50 μm.

<Coating material composition>

The coating material composition of the present embodiment comprises component (A): a polyol composition and component (B): an isocyanate composition, wherein a baking time (drying time) until any finger mark is no longer left in the following finger touch evaluation is within 60 minutes.

[Finger touch evaluation]

The coating material composition is used, and applied onto a polycarbonate plate (2 mm × 70 mm × 150 mm) such that a dry film thickness is a thickness of 40 μm, and the applied coating material composition is baked at 60°C to obtain a polyurethane coating film; and in this step, the baking time (drying time) until any finger mark is no longer left on the surface is measured after the application.
Examples of the coating material composition comprising component (A): a polyol composition and component (B): an isocyanate composition include, but are not particularly limited to, one-component coating materials and two-component coating materials. Examples of the one-component coating material include, but are not particularly limited to, thermoplastic polyurethane coating materials, polyurethane dispersion coating materials, and coating materials containing block isocyanate. Examples of the two-component coating material include, but are not particularly limited to, coating materials obtained by mixing the polyol composition and the isocyanate composition immediately before painting.
The coating material composition of the present embodiment can form a coating film excellent in physical properties by comprising the component (A) and the component (B) and setting the baking time (drying time) until any finger mark is no longer left to the specific range mentioned above in the finger touch evaluation. Specifically, when the coating material composition is, for example, a transparent clear coating material composition, a coating film excellent in chemical resistance, scratch resistance and moist heat resistance can be obtained. When the coating material composition is, for example, a soft-feel coating material composition containing a flatting agent, a coating film excellent in sunscreen resistance and weather resistance can be obtained.
For the coating material composition of the present embodiment, the baking time (drying time) until any finger mark is no longer left in the finger touch evaluation is preferably 5 minutes to 55 minutes, more preferably 10 minutes to 50 minutes, further preferably 15 minutes to 45 minutes, still further preferably 20 minutes to 30 minutes.
In the coating material composition of the present embodiment, the ratio between the mole number of a hydroxy group (OH group) contained in the component (A) and the mole number of an isocyanate group (NCO group) contained in the component (B) (the mole number of the NCO group / the mole number of the OH group) is preferably 0.2 to 7.0, more preferably 0.5 to 5.0, further preferably 0.8 to 3.0, still further preferably 0.8 to 2.5, particularly preferably 0.8 to 2.0.
Hereinafter, each component will be described in detail.

<Component (A): polyol composition>

The polyol composition (component (A)) contained in the coating material composition of the present embodiment has a hydroxy group reactive with an isocyanate group. The hydroxy value of the polyol composition is preferably 10 to 400 mg-KOH/g, more preferably 20 to 300 mg-KOH/g, further preferably 30 to 250 mg-KOH/g. The hydroxy value

of the polyol composition can be calculated by use of a method described in Examples mentioned later.

Examples of the component (A) include, but are not limited to, polyester polyol, polyether polyol, acrylic polyol, polyolefin polyol, fluorine polyol, and polycarbonate polyol.

[Polyester polyol]

The polyester polyol can be obtained, for example, through the condensation reaction of a dibasic acid used alone or as a mixture of two or more types with a polyhydric alcohol used alone or as a mixture of two or more types.

Examples of the dibasic acid include, but are not particularly limited to, carboxylic acids such as succinic acid, adipic acid, dimer acid, maleic anhydride, phthalic anhydride, isophthalic acid, terephthalic acid, and 1,4-cyclohexanedicarboxylic acid.

Examples of the polyhydric alcohol include, but are not particularly limited to, ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylpropanediol, and ethoxylated trimethylolpropane.

A specific method for producing the polyester polyol is not particularly limited. For example, the components described above can be mixed and heated at approximately 160 to 220°C for condensation reaction.

For example, polycaprolactones obtained through the ring-opening polymerization of lactones such as ε-caprolactone using a polyhydric alcohol may be used as the polyester polyol.

The polyester polyol obtained by the production method mentioned above can be modified using aromatic diisocyanate, aliphatic diisocyanate, alicyclic diisocyanate, or a compound obtained therefrom, etc. Among others, aliphatic diisocyanate, alicyclic diisocyanate, or a compound obtained therefrom is preferably used for the modification of the polyester polyol from the viewpoint of the weather resistance and yellowing resistance, etc. of the resulting coating film.

When the coating material composition of the present embodiment contains a solvent having a large moisture content, some carboxylic acids derived from the dibasic acid or the like in the polyester polyol can be allowed to remain and neutralized with a base such as amine or ammonia to prepare the polyester polyol as a watersoluble or water-dispersible resin.

[Polyether polyol]

The polyether polyol can be obtained by use of, for example, but not particularly limited to, any of the following methods (1) to (3).

(1) A method of using a catalyst, and random- or block-adding alkylene oxide used alone or as a mixture to a polyhydric hydroxy compound used alone or as a mixture to obtain the polyether polyol.
Examples of the catalyst include, but are not particularly limited to, hydroxides (lithium hydroxide, sodium hydroxide, potassium hydroxide, etc.), strongly basic catalysts (alcoholate, alkylamine, etc.), and composite metal-cyanide compound complexes (metalloporphyrin, zinc hexacyanocobaltate complexes, etc.).
Examples of the alkylene oxide include, but are not particularly limited to, ethylene oxide, propylene oxide, butylene oxide, cyclohexene oxide, and styrene oxide.
(2) A method of reacting a polyamine compound with alkylene oxide to obtain the polyether polyol.
Examples of the polyamine compound include, but are not particularly limited to, ethylenediamines.
Examples of the alkylene oxide include the same as those listed in the method (1).
(3) A method of polymerizing acrylamide or the like with the polyether polyol obtained by the method (1) or (2) as a medium to obtain so-called polymer polyols.

Examples of the polyhydric hydroxy compound include, but are not particularly limited to, the following compounds (i) to (vi).

(i) Diglycerin, ditrimethylolpropane, pentaerythritol, dipentaerythritol, etc.
(ii) Sugar alcohol compounds such as erythritol, D-threitol, L-arabinitol, ribitol, xylitol, sorbitol, mannitol, galactitol, and rhamnitol.
(iii) Monosaccharides such as arabinose, ribose, xylose, glucose, mannose, galactose, fructose, sorbose, rhamnose, fucose, and ribodesose.
(iv) Disaccharides such as trehalose, sucrose, maltose, cellobiose, gentiobiose, lactose, and melibiose.
(v) Trisaccharides such as raffinose, gentianose, and melezitose.
(vi) Tetrasaccharides such as stachyose.

[Acrylic polyol]

The acrylic polyol can be obtained, for example, but not particularly limited to, by polymerizing only a polymerizable monomer having at least one active hydrogen in one molecule, or by copolymerizing a polymerizable monomer having at least one active hydrogen in one molecule with another monomer copolymerizable with the polymerizable monomer.

Examples of the polymerizable monomer having at least one active hydrogen in one molecule include, but are not particularly limited to, compounds (i) to (vi) given below. These polymerizable monomers may be used alone or may be used in combination of two or more types.

(i) Acrylic acid esters having active hydrogen, such as 2-hydroxyethyl acrylate, 2-hydroxypropyl acrylate, and 2-hydroxybutyl acrylate.
(ii) Methacrylic acid esters having active hydrogen, such as 2-hydroxyethyl methacrylate, 2-hydroxypropyl methacrylate, 2-hydroxybutyl methacrylate, 3-hydroxypropyl methacrylate, and 4-hydroxybutyl methacrylate.
(iii) (Meth)acrylic acid esters having polyhydric active hydrogen, such as (meth)acrylic acid monoesters of triols such as glycerin and trimethylolpropane.
(iv) Monoethers of polyether polyols (e.g., polyethylene glycol, polypropylene glycol, and polybutylene glycol) and the (meth)acrylic acid esters having active hydrogen described above.
(v) Adducts of glycidyl (meth)acrylate and monobasic acids (e.g., acetic acid, propionic acid, and p-tert-butylbenzoic acid).
(vi) Adducts obtained through the ring-opening polymerization of lactones (e.g., ε-caprolactone and γ-valerolactone) with the active hydrogen of the (meth)acrylic acid esters having active hydrogen described above.

Examples of the another monomer copolymerizable with the polymerizable monomer include, but are not particularly limited to, compounds (i) to (iv) given below. These monomers may be used alone or may be used in combination of two or more types.

(i) (Meth)acrylic acid esters such as methyl acrylate, ethyl acrylate, isopropyl acrylate, n-butyl acrylate, 2-ethylhexyl acrylate, methyl methacrylate, ethyl methacrylate, isopropyl methacrylate, n-butyl methacrylate, isobutyl methacrylate, n-hexyl methacrylate, cyclohexyl methacrylate, lauryl methacrylate, and glycidyl methacrylate.
(ii) Unsaturated carboxylic acids such as acrylic acid, methacrylic acid, maleic acid, and itaconic acid, and unsaturated amides such as acrylamide, N-methylolacrylamide, and diacetone acrylamide.
(iii) Vinyl monomers having a hydrolysable silyl group, such as vinyltrimethoxysilane, vinylmethyldimethoxysilane, and γ-(meth)acryloxypropyltrimethoxysilane.
(iv) Other polymerizable monomers such as styrene, vinyltoluene, vinyl acetate, acrylonitrile, and dibutyl fumarate.

A specific method for producing the acrylic polyol is not particularly limited. For example, the monomer described above can be solution-polymerized in the presence of a radical polymerization initiator, such as peroxide or an azo compound, known in the art, and diluted, if necessary, with an organic solvent or the like to obtain the acrylic polyol.

When the coating material composition of the present embodiment contains a solvent having a large moisture content, the acrylic polyol can be produced by a method of solution-polymerizing the monomer described above, followed by conversion into an aqueous layer, or a method known in the art such as emulsion polymerization. In this case, water solubility or water dispersibility can be imparted to the acrylic polyol by neutralizing an acidic moiety such as a carboxylic acid-containing monomer (acrylic acid, methacrylic acid, etc.) or a sulfonic acid-containing monomer with amine or ammonia.

[Polyolefin polyol]

Examples of the polyolefin polyol include, but are not particularly limited to, polybutadiene having two or more hydroxy groups, hydrogenated polybutadiene having two or more hydroxy groups, polyisoprene having two or more hydroxy groups, and hydrogenated polyisoprene having two or more hydroxy groups.

The number of hydroxy groups in statistical one molecule of the polyolefin polyol (hereinafter, also referred to as the "average number of hydroxy groups") is preferably 2 or more.

[Fluorine polyol]

The "fluorine polyol" described herein means polyol containing fluorine in the molecule. Specific examples of the fluorine polyol include, but are not particularly limited to, copolymers of fluoroolefin, cyclovinyl ether, hydroxyalkyl

vinyl ether, monocarboxylic acid vinyl ester, and the like disclosed in Japanese Patent Laid-Open No. 57-34107 (Reference 1) and Japanese Patent Laid-Open No. 61-275311 (Reference 2).

[Polycarbonate polyol]

The polycarbonate polyol can be obtained, for example, but not particularly limited to, through the condensation reaction of a carbonate compound with polyol or a polyhydric alcohol used alone or as a mixture of two or more types.
The carbonate compound is the same as a carbonate compound mentioned later.
Examples of the polyol include, but are not particularly limited to, the polyester polyol, the polyether polyol, the acrylic polyol, the polyolefin polyol, and the fluorine polyol.
Examples of the polyhydric alcohol include, but are not particularly limited to, diol compounds, trimethylolpropane, pentaerythritol, and glycerin. The diol compound is the same as a diol compound mentioned later.
A specific method for producing the polycarbonate polyol is performed under the same production conditions as those for polycarbonate diol (II-1) mentioned later.
The component (A) preferably contains a carbonate group.
The component (A) may have a structure represented by the following (A-I):

$$-\left(R^1-O-CO-O\right)_a- \quad \ldots \text{(A-I)}$$

wherein $R^1$ is a divalent linear, branched or cyclic aliphatic, or aromatic hydrocarbon group having 2 or more and 20 or less carbon atoms, and a plurality of $R^1$ moieties are the same as or different from each other; and a is the number of 1 or larger and 50 or smaller.
Hereinafter, the structure (A-I) will be described in detail.

($R^1$)

In the general formula (I), $R^1$ is a divalent linear, branched or cyclic aliphatic, or aromatic hydrocarbon group having 2 or more and 20 or less carbon atoms, and a plurality of $R^1$ moieties are the same as or different from each other.
The divalent linear aliphatic hydrocarbon group represented by $R^1$ has 2 or more and 20 or less, preferably 3 or more and 12 or less, more preferably 3 or more and 10 or less carbon atoms.
Specific examples of the divalent linear aliphatic hydrocarbon group represented by $R^1$ include, but are not particularly limited to, an ethylene group, a propylene group, a butylene group, a pentylene group, a hexylene group, a heptylene group, an octylene group, a nonylene group, and a decylene group. Among others, a propylene group, a butylene group, a pentylene group, a hexylene group, a nonylene group, or a decylene group is preferred from the viewpoint of versatility.
The divalent branched aliphatic hydrocarbon group represented by $R^1$ has 3 or more and 20 or less, preferably 3 or more and 12 or less, more preferably 3 or more and 10 or less carbon atoms.
Specific examples of the divalent branched aliphatic hydrocarbon group represented by $R^1$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group. Among others, an isopropylene group, an isobutylene group, an isopentylene group, a 2,2-dimethyltrimethylene group or an isohexylene group is preferred from the viewpoint of versatility.
The divalent cyclic aliphatic hydrocarbon group represented by $R^1$ has 3 or more and 20 or less, preferably 6 or more and 15 or less, more preferably 6 or more and 10 or less carbon atoms.
Specific examples of the divalent cyclic aliphatic hydrocarbon group represented by $R^1$ include, but are not particularly limited to, a cyclobutylene group, a cyclopentylene group, a cyclohexylene group, and a cycloheptylene group.
The divalent aromatic hydrocarbon group represented by $R^1$ has 6 or more and 20 or less, preferably 6 or more and 15 or less, more preferably 6 or more and 12 or less carbon atoms.
Specific examples of the divalent aromatic hydrocarbon group represented by $R^1$ include, but are not particularly limited to, a phenylene group and a naphthylene group.
Among others, $R^1$ is preferably a divalent linear, branched or cyclic aliphatic hydrocarbon group having 2 or more and 20 or less carbon atoms (i.e., an alkylene group), more preferably a divalent linear aliphatic hydrocarbon group having 3 or more and 12 or less carbon atoms, or a divalent branched aliphatic hydrocarbon group having 3 or more and 20 or less carbon atoms, further preferably a divalent linear aliphatic hydrocarbon group having 3 or more and 10

or less carbon atoms.

(a)

In the general formula (A-I), a represents the number of repeats of the carbonate structure ($-R^1-O-COO-$). a is the number of 1 or larger and 50 or smaller, preferably the number of 2 or larger and 50 or smaller, more preferably the number of 3 or larger and 30 or smaller, further preferably the number of 4 or larger and 20 or smaller.

a can be determined by isolating the starting material diol component through the alkali decomposition of the polycarbonate diol composition, and subjecting the component to GC-MS measurement, LC-MS measurement and GPC measurement.

<Component (A1): polycarbonate diol composition>

The polyol composition (component (A)) preferably contains the following component (A1):
component (A1): a polycarbonate diol composition comprising a structure represented by the following general formula (I) and a polycarbonate structure represented by the formula (A-I), the polycarbonate diol composition having hydroxy groups at both ends and having a hydroxy value of 10 to 400 mg-KOH/g, wherein based on the total mass of the structure represented by the following general formula (I) and the polycarbonate structure represented by the formula (A-I), a content of the structure represented by the following general formula (I) is 5% by mass or more and 50% by mass or less, and a content of the polycarbonate structure represented by the formula (A-I) is 50% by mass or more and 95% by mass or less:

$$-\left(R^{11}-O\right)_{n11}- \quad \cdots \text{(I)}$$

wherein $R^{11}$ is a divalent linear, branched or cyclic aliphatic, or aromatic hydrocarbon group having 2 or more and 20 or less carbon atoms, and a plurality of $R^{11}$ moieties are the same as or different from each other; and n11 is the number of 7 or larger and 70 or smaller.

When the component (A) contains the component (A1), the coating material composition of the present embodiment tends to produce a coating film much superior in physical properties. Specifically, when the coating material composition is, for example, a transparent clear coating material composition, a coating film excellent in chemical resistance, scratch resistance and moist heat resistance can be obtained. When the coating material composition is, for example, a soft-feel coating material composition containing a flatting agent, a coating film excellent in sunscreen resistance and weather resistance can be obtained.

The polycarbonate diol composition (component (A1)) comprises polycarbonate diol. This polycarbonate diol contains a structure represented by the general formula (I) (hereinafter, also referred to as a "structure (I)") and a polycarbonate structure represented by the formula (A-I) (hereinafter, also referred to as a "polycarbonate structure (A-I)") in the molecular chain.

Based on the total mass of the structure represented by the general formula (I) and the polycarbonate structure represented by the formula (A-I), the content of the structure represented by the general formula (I) is preferably 5% by mass or more and 50% by mass or less, and the content of the polycarbonate structure represented by the formula (A-I) is preferably 50% by mass or more and 95% by mass or less.

When the content of the structure represented by the general formula (I) falls within the range described above, the coating material composition of the present embodiment tends to produce a coating film much superior in physical properties.

The content of the structure represented by the general formula (I) and the content of the polycarbonate structure represented by the formula (A-I) in the polycarbonate diol composition (component (A1)) can be measured by, for example, the following procedures (1) to (4) .

(1) The polycarbonate diol composition is alkali-hydrolyzed in an ethanolic potassium hydroxide solution to regenerate a diol component.
(2) Phenolphthalein is used as an indicator, and the mixture is neutralized by the addition of hydrochloric acid.
(3) A deposited salt is filtered off, and the filtrate is measured by GPC.
(4) The concentration of diol having hydroxy groups at both ends of the structure represented by the general formula (I) in the filtrate is determined from a separately prepared calibration curve. The mass of the diol having hydroxy groups at both ends of the structure represented by the general formula (I) is calculated from the concentration and

divided by the mass of the polycarbonate diol composition used in the alkali hydrolysis. The obtained value is the content of the diol having hydroxy groups at both ends of the structure represented by the general formula (I).

The terminal structure of the structure represented by the general formula (I) in the polycarbonate diol composition (component (A1)) is a terminal structure where one of the ends is bonded to a carbonate group (-O-CO-O-), and the other end is bonded to a hydroxy group (-OH), a terminal structure where both ends are bonded to carbonate groups (-O-CO-O-), or a terminal structure where both ends are bonded to hydroxy groups (-OH).

A molecule having the structure represented by the general formula (I) in the polycarbonate diol composition (component (A1)) has hydroxy groups at both ends.

The molecule having the polycarbonate structure contained in the polycarbonate diol composition (component (A1)) has hydroxy groups at both ends thereof. Specifically, the molecule having the polycarbonate structure contained in the polycarbonate diol composition (component (A1)) is polycarbonate diol. A portion of the terminal hydroxy groups may be converted to an alkyl group, an aryl group or the like unreactive with an isocyanate group due to impurities in various starting materials for use in the production of the polycarbonate diol composition, a terminal structure that is secondarily produced during the production of the polycarbonate diol composition, etc., or in order to control a urethanization reaction rate or state for the purpose of using the polycarbonate diol composition. In the present embodiment, in consideration of such a case, the terminal groups of the polycarbonate diol also encompass the case where 100% by mol of groups at both ends is not strictly a hydroxy group. From such a viewpoint, the ratio of the hydroxy groups to the total molar quantity of terminal groups is preferably 90% by mol or more, more preferably 95% by mol or more.

The structures at both ends of the polycarbonate diol contained in the polycarbonate diol composition can be confirmed in accordance with, for example, a method for measuring a primary terminal OH ratio, described in Japanese Patent No. 3874664 (Reference 3).

Ethanol as well as a solvent such as tetrahydrofuran, acetone, or methanol can be used as a solvent recovering fractions.

The hydroxy value of the polycarbonate diol composition (component (A1)) is preferably 10 to 400 mg-KOH/g, more preferably 20 to 300 mg-KOH/g, further preferably 30 to 250 mg-KOH/g. The hydroxy value can be calculated by use of a method described in Examples mentioned later.

When the hydroxy value is equal to or larger than the lower limit value described above, thermoplastic urethane obtained from the polycarbonate diol composition tends to have better flexibility and low-temperature characteristics. On the other hand, when the hydroxy value is equal to or smaller than the upper limit value described above, thermoplastic urethane obtained from the polycarbonate diol composition tends to have better molding processability.

[Structure (I)]

In the polycarbonate diol composition (component (A1)), the content of the structure (I) is preferably 5% by mass or more and 50% by mass or less, more preferably 5% by mass or more and 35% by mass or less, further preferably 5% by mass or more and 20% by mass or less, particularly preferably 5% by mass or more and 15% by mass or less, based on the total mass of the structure (I) and the polycarbonate structure (A-I).

When the content of the structure (I) is equal to or more than the lower limit value described above, a coating film much superior in scratch recovery is obtained. When the content of the structure (I) is equal to or less than the upper limit value described above, a coating film much superior in heat resistance is obtained.

In the polycarbonate diol composition (component (A1)), the terminal structure of the structure (I) is a terminal structure where one of the ends is bonded to a carbonate group, and the other end is bonded to a hydroxy group, a terminal structure where both ends are bonded to carbonate groups, or a terminal structure where both ends are bonded to hydroxy groups.

Alternatively, in the polycarbonate diol composition (component (A1)), the terminal structure of the structure (I) may be a mixture of a terminal structure where one of the ends is bonded to a carbonate group, and the other end is bonded to a hydroxy group, and a terminal structure where both ends are bonded to carbonate groups.

Hereinafter, the structure (I) will be described in detail.

($R^{11}$)

In the general formula (I), $R^{11}$ is a divalent linear, branched or cyclic aliphatic, or aromatic hydrocarbon group having 2 or more and 20 or less carbon atoms, and a plurality of $R^{11}$ moieties are the same as or different from each other. Among others, a plurality of $R^{11}$ moieties are preferably the same as each other because of easy synthesis.

The divalent linear aliphatic hydrocarbon group represented by $R^{11}$ has 2 or more and 20 or less, preferably 2 or more and 12 or less, more preferably 2 or more and 10 or less carbon atoms.

Specific examples of the divalent linear aliphatic hydrocarbon group represented by $R^{11}$ include, but are not

particularly limited to, an ethylene group, a trimethylene group, a tetramethylene group, a pentamethylene group, a hexamethylene group, a heptylene group, an octylene group, a nonylene group, a decylene group, an undecylene group, and a dodecylene group.

The divalent branched aliphatic hydrocarbon group represented by $R^{11}$ has 3 or more and 20 or less, preferably 3 or more and 12 or less, more preferably 3 or more and 10 or less carbon atoms.

Specific examples of the divalent branched aliphatic hydrocarbon group represented by $R^{11}$ include, but are not particularly limited to, an isopropylene group, an isobutylene group, a tert-butylene group, an isopentylene group, a 2,2-dimethyltrimethylene group, an isohexylene group, an isoheptylene group, and an isooctylene group.

The divalent cyclic aliphatic hydrocarbon group represented by $R^{11}$ has 6 or more and 20 or less, preferably 6 or more and 15 or less, more preferably 6 or more and 10 or less carbon atoms.

Specific examples of the divalent cyclic aliphatic hydrocarbon group represented by $R^{11}$ include, but are not particularly limited to, a cyclobutylene group, a cyclopentylene group, a cyclohexylene group, and a cycloheptylene group.

The divalent aromatic hydrocarbon group represented by $R^{11}$ has 6 or more and 20 or less, preferably 6 or more and 15 or less, more preferably 6 or more and 12 or less carbon atoms.

Specific examples of the divalent aromatic hydrocarbon group represented by $R^{11}$ include, but are not particularly limited to, a phenylene group and a naphthylene group.

Among others, $R^{11}$ is preferably a divalent linear, branched or cyclic aliphatic hydrocarbon group having 2 or more and 20 or less carbon atoms (i.e., an alkylene group), more preferably a divalent linear aliphatic hydrocarbon group having 2 or more and 12 or less carbon atoms, or a divalent branched aliphatic hydrocarbon group having 3 or more and 20 or less carbon atoms, further preferably a divalent linear aliphatic hydrocarbon group having 2 or more and 10 or less carbon atoms.

(n11)

In the general formula (I), n11 represents the number of repeats of the structure ($-R^{11}-O-$). n11 is the number of 7 or larger and 70 or smaller, preferably the number of 7 or larger and 60 or smaller, more preferably the number of 7 or larger and 50 or smaller.

When n11 is equal to or larger than the lower limit value described above, a coating film obtained using the polycarbonate diol composition (component (A1)) tends to have better water resistance and heat resistance because the amount of the starting material diol used having hydroxy groups at both ends of the structure represented by the general formula (I) can be reduced. When n11 is equal to or smaller than the upper limit value described above, the crystallinity and turbidity of the polycarbonate diol composition tends to be further suppressed.

n11 described above can be determined by isolating the starting material diol component through the alkali decomposition of the polycarbonate diol composition, and subjecting the component to GC-MS measurement, LC-MS measurement and gel permeation chromatography (GPC) measurement.

Among others, the structure (I) is preferably a polyoxyalkylene structure.

Specific examples of the preferred oxyalkylene group contained in the structure (I) include, but are not particularly limited to, an oxyethylene group, an oxy-1-methylethylene group, an oxytetramethylene group, and an oxy-2,2-dimethyltrimethylene group. Among others, an oxyethylene group or an oxy-1-methylethylene group is preferred.

A polyoxyethylene structure, a polyoxy-1-methylethylene structure and/or a polyoxyethylene/polyoxy-1-methylethylene structure is particularly preferred where the oxyalkylene group contained in the structure (I) is an oxyethylene group and/or an oxy-1-methylethylene group.

When the structure (I) contains an oxy-1-methylethylene group and/or an oxyethylene group, preferably, the content of the oxy-1-methylethylene group is 10% by mass or more and 100% by mass or less, and the content of the oxyethylene group is 0% by mass or more and 90% by mass or less; more preferably, the content of the oxy-1-methylethylene group is 30% by mass or more and 100% by mass or less, and the content of the oxyethylene group is 0% by mass or more and 70% by mass or less; further preferably, the content of the oxy-1-methylethylene group is 50% by mass or more and 100% by mass or less, and the content of the oxyethylene group is 0% by mass or more and 50% by mass or less; and particularly preferably, the content of the oxy-1-methylethylene group is 70% by mass or more and 100% by mass or less, and the content of the oxyethylene group is 0% by mass or more and 30% by mass or less, based on the total mass of the structure (I).

When the structure (I) contains an oxytetramethylene group and/or an oxy-2,2-dimethyltrimethylene group, preferably, the content of the oxytetramethylene group is 5% by mass or more and 100% by mass or less, and the content of the oxy-2,2-dimethyltrimethylene group is 0% by mass or more and 95% by mass or less; more preferably, the content of the oxytetramethylene group is 10% by mass or more and 100% by mass or less, and the content of the oxy-2,2-dimethyltrimethylene group is 0% by mass or more and 90% by mass or less; further preferably, the content of the oxytetramethylene group is 30% by mass or more and 100% by mass or less, and the content of the oxy-2,2-dimethyltrimethylene group is 0% by mass or more and 70% by mass or less; still further preferably, the content of the

oxytetramethylene group is 50% by mass or more and 100% by mass or less, and the content of the oxy-2,2-dimethyltrimethylene group is 0% by mass or more and 50% by mass or less; particularly preferably the content of the oxytetramethylene group is 70% by mass or more and 100% by mass or less, and the content of the oxy-2,2-dimethyltrimethylene group is 0% by mass or more and 30% by mass or less, based on the total mass of the structure (I)

[Polycarbonate structure (A-I)]

In the polycarbonate diol composition used in the present embodiment, the content of the polycarbonate structure (A-I) is preferably 50% by mass or more and 95% by mass or less, more preferably 65% by mass or more and 95% by mass or less, further preferably 80% by mass or more and 95% by mass or less, particularly preferably 85% by mass or more and 95% by mass or less, based on the total mass of the structure (I) and the polycarbonate structure (A-I).

When the content of the polycarbonate structure (A-I) is equal to or more than the lower limit value described above, a coating film much superior in water resistance, heat resistance, chemical resistance, abrasion resistance, etc. tends to be obtained. When the content of the polycarbonate structure (A-I) is equal to or less than the upper limit value described above, the polycarbonate diol composition is much superior in compatibility with polyether polyol.

<Method for producing polycarbonate diol composition (component (A1))>

The polycarbonate diol composition (component (A1)) can be obtained through transesterification reaction using ether diol represented by the following general formula (I-1) (hereinafter, also referred to as "ether diol (I-1)") and polycarbonate diol represented by the following general formula (II-1) (hereinafter, also referred to as "polycarbonate diol (II-1)"):

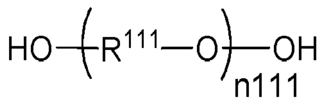 ... (I-1)

wherein $R^{111}$ is the same as $R^{11}$ described above; and n111 is the same as n11 described above, and

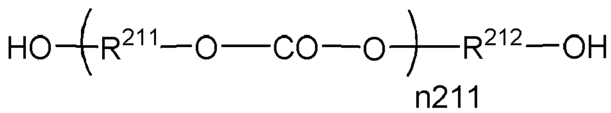 ... (II-1)

wherein each of $R^{211}$ and $R^{212}$ is the same as $R^1$ described above; and n211 is the same as a described above.

[Ether diol (I-1)]

The ether diol (I-1) for use in the production of the polycarbonate diol composition (component (A1)) can be any compound having a structure represented by the general formula (I-1). Among others, the ether diol (I-1) is preferably polyoxyalkylene diol. Products having various hydroxy values are commercially available as the ether diol (I-1), and such a commercially available product may be used. Examples of the commercially available product of the ether diol (I-1) include, but are not particularly limited to, polyoxyalkylene diols such as "polyethylene glycol" series and "polytetramethylene oxide" series manufactured by Wako Pure Chemical Industries, Ltd., "PTXG" series manufactured by Asahi Kasei Corp., "Sunnix" series and "Newpol" series manufactured by Sanyo Chemical Industries, Ltd., and "Plonon" series manufactured by NOF Corp.

The hydroxy value of the ether diol (I-1) is not particularly limited and is preferably 30 to 400 mg-KOH/g, more preferably 50 to 200 mg-KOH/g. When the hydroxy value of the ether diol (I-1) for use in production is equal to or more than the lower limit value described above, the amount of the starting material ether diol (I-1) used can be further reduced. Furthermore, a coating film obtained from the polycarbonate diol composition tends to have better water resistance and heat resistance. When the hydroxy value of the ether diol (I-1) for use in production is equal to or less than the upper limit value described above, the crystallinity and turbidity of the polycarbonate diol composition tends to be further suppressed.

[Polycarbonate diol (II-1)]

The polycarbonate diol (II-1) for use in the production of the polycarbonate diol composition (component (A1)) can be any compound having a structure represented by the general formula (II-1). A method for producing the polycarbonate diol (II-1) is not particularly limited, and a method known in the art may be adopted. The polycarbonate diol (II-1) can be obtained, for example, through the reaction of a carbonate compound with a diol compound in the presence of a transesterification catalyst.

(Carbonate compound)

Examples of the carbonate compound for use in the production of the polycarbonate diol(II-1) include, but are not limited to, alkylene carbonate, dialkyl carbonate, and diaryl carbonate.
Examples of the alkylene carbonate include, but are not particularly limited to, ethylene carbonate, trimethylene carbonate, 1,2-propylene carbonate, 1,2-butylene carbonate, 1,3-butylene carbonate, and 1,2-pentylene carbonate.
Examples of the dialkyl carbonate include, but are not particularly limited to, dimethyl carbonate, diethyl carbonate, dipropyl carbonate, and dibutyl carbonate.
Examples of the diaryl carbonate include, but are not particularly limited to, diphenyl carbonate.
Among others, the carbonate compound for use in the production of the polycarbonate diol (II-1) is preferably alkylene carbonate, more preferably ethylene carbonate.

(Diol compound)

Examples of the diol compound for use in the production of the polycarbonate diol (II-1) include, but are not limited to, linear diol, branched diol, cyclic diol, and diol having an aromatic ring.
Examples of the linear diol include, but are not particularly limited to, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol.
Examples of the branched diol include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, and 2,4-diethyl-1,5-pentanediol.
Examples of the cyclic diol include, but are not particularly limited to, 1,3-cyclohexanediol, 1,4-cyclohexanediol, 1,4-cyclohexanedimethanol, and 2-bis(4-hydroxycyclohexyl)-propane.
Examples of the diol having an aromatic ring include, but are not particularly limited to, p-xylenediol, p-tetrachloroxylenediol, 1,4-bis(hydroxyethoxy)benzene, 2,2-bis[(4-hydroxyethoxy)phenyl]propane.
Among others, 1,3-propanediol, 2-methyl-1,3-propanediol, 1,4-butanediol, 1,5-pentanediol, 3-methyl-1,5-pentanediol, 1,6-hexanediol, 1,9-nonanediol or 1,10-decanediol is more preferred.

[Production conditions for polycarbonate diol composition (component (A1)) and polycarbonate diol (II-1)]

For the production of the starting material polycarbonate diol (II-1), a transesterification reaction catalyst can be used. The catalyst can be selected from usual transesterification reaction catalysts.
Examples of the transesterification reaction catalyst include, but are not particularly limited to, alkali metals and alkaline earth metals, and alcoholates thereof, hydrides thereof, oxides thereof, amides thereof, hydroxides thereof and salts thereof.
Examples of the salts of the alkali metal and the alkaline earth metal include, but are not particularly limited to, carbonate, nitrogen-containing borate, and basic salts with organic acids.
Examples of the alkali metal include, but are not particularly limited to, lithium, sodium, and potassium.
Examples of the alkaline earth metal include, but are not particularly limited to, magnesium, calcium, strontium, and barium.
Examples of the transesterification catalyst using a metal other than alkali metals and alkaline earth metals include, but are not particularly limited to, metals other than alkali metals and alkaline earth metals, and salts thereof, alcoholates thereof, and organic compounds containing the metals.
Specific examples of the metal other than alkali metals and alkaline earth metals include, but are not particularly limited to, aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, and ytterbium.
One of these transesterification catalysts can be used alone, or two or more thereof can be used in combination.
Among others, the transesterification reaction catalyst is preferably at least one metal selected from the group

consisting of sodium, potassium, magnesium, titanium, zirconium, tin, lead and ytterbium, or a salt thereof, an alkoxide thereof, or an organic compound containing the metal, because transesterification reaction to obtain the polycarbonate diol is more favorably performed, and use of the resulting polycarbonate diol has less influence on urethane reaction.

The transesterification reaction catalyst is more preferably at least one metal selected from the group consisting of magnesium, titanium, ytterbium, tin and zirconium.

Specific examples of the preferred transesterification catalyst include compounds of lead, compounds of titanium, and compounds of magnesium.

Examples of the compound of lead include, but are not particularly limited to, lead acetate trihydrate, tetraphenyl lead, and lead stearate.

Examples of the compound of titanium include, but are not particularly limited to, titanium tetra-n-butoxide, titanium tetra-n-propoxide, and titanium tetraisopropoxide.

Examples of the compound of magnesium include, but are not particularly limited to, magnesium acetate and magnesium acetate tetrahydrate.

The amount of the transesterification reaction catalyst used is preferably 0.00001% by mass or more and 0.1% by mass or less, more preferably 0.0001% by mass or more and 0.05% by mass or less, based on the total mass of the starting materials.

The transesterification catalyst used in transesterification reaction is not consumed by the transesterification reaction when heat treatment is performed subsequently to the production of the polycarbonate diol. Therefore, its amount can be calculated on the basis of the amount of the transesterification reaction catalyst used. In the case of using, for example, commercially available polycarbonate diol, the amount of a metal of the transesterification reaction catalyst contained in the polycarbonate diol is determined by ICP (inductively coupled plasma) measurement.

The polycarbonate diol (II-1) for use in the production of the polycarbonate diol composition (component (A1)) may be supplemented with a catalyst poison such as a phosphoric acid ester compound in order to deactivate the transesterification reaction catalyst used in the production thereof.

When the starting material polycarbonate diol (II-1) contains a catalyst poison for the transesterification reaction catalyst, etc. used in the production thereof, the transesterification reaction of the ether diol (I-1) with the polycarbonate diol (II-1) usually tends to be less likely to progress. Hence, for the production of the polycarbonate diol composition (component (A1)), the transesterification reaction catalyst described above can be newly added in a necessary amount.

On the other hand, when the starting material polycarbonate diol (II-1) contains no catalyst poison for the transesterification reaction catalyst, the transesterification reaction according to the present embodiment usually tends to be more likely to progress. However, in the case of, for example, further lowering a reaction temperature or further shortening a reaction time in the process of producing the polycarbonate diol composition (component (A1)), the transesterification reaction catalyst can also be newly added in a necessary amount. In this case, the same transesterification reaction catalyst as that used in the production of the starting material polycarbonate diol (II-1) can be adopted.

The polycarbonate diol (II-1) for use in the production of the polycarbonate diol composition (component (A1)) may be homo polycarbonate diol obtained from one diol compound, or may be a copolymeric polycarbonate diol obtained from two or more diol compounds.

Use of any of the above-listed polycarbonate diols (II-1) can produce the polycarbonate diol composition (component (A1)) through transesterification reaction with the ether diol (I-1).

However, for example, homo polycarbonate diol obtained using 1,6-hexanediol, which is widely used on the market, is usually a solid at ordinary temperature. Hence, a polycarbonate diol composition (component (A1)) obtained through the transesterification reaction of the homo polycarbonate diol with the ether diol (I-1) tends to be also a solid at ordinary temperature.

On the other hand, for example, copolymeric polycarbonate diol obtained using two types, 1,5-pentanediol and 1,6-hexanediol, is a liquid at ordinary temperature. Hence, a polycarbonate diol composition (component (A1)) obtained through the transesterification reaction of the copolymeric polycarbonate diol with the ether diol (I-1) tends to be also a liquid at ordinary temperature.

Accordingly, the starting material polycarbonate diol is often preferably a liquid at ordinary temperature from the viewpoint of handleability

The hydroxy value of the polycarbonate diol (II-1) for use in the production of the polycarbonate diol composition (component (A1)) is not particularly limited and is preferably 20 to 300 mg-KOH/g, more preferably 30 to 250 mg-KOH/g.

When the hydroxy value of the polycarbonate diol (II-1) is equal to or more than the lower limit value described above, performance expected for the polycarbonate diol tends to be better. On the other hand, when the hydroxy value of the polycarbonate diol (II-1) is equal to or less than the upper limit value described above, the polycarbonate diol composition (component (A1)) can be more effectively prevented from having a higher viscosity. Thus, handleability tends to be better.

The polycarbonate diol composition (component (A1)) may be produced through the polycondensation reaction of the ether diol (I-1) for use as diol with the carbonate compound. However, for the progression of such polycondensation

reaction of the polycarbonate diol, it is usually preferred to heat the reaction mixture at a high temperature for a long time. This may increase the possibility of causing undesirable side reaction or may increase workload in the shift of the type of products.

From such a viewpoint, the method for producing the polycarbonate diol composition (component (A1)) is preferably production through transesterification reaction using the ether diol (I-1) and the polycarbonate diol (II-1) without the use of polycondensation reaction using the ether diol (I-1) and the carbonate compound.

Specifically, the transesterification reaction can be carried out by mixing ether diol (I-1) with the polycarbonate diol (II-1), and stirring the mixture under heating.

The temperature of the transesterification reaction is not particularly limited and is preferably 120°C or higher and 250°C or lower, more preferably 140°C or higher and 200°C or lower.

When the reaction temperature is equal to or higher than the lower limit value described above, the transesterification reaction can be performed in a shorter time, leading to excellent cost efficiency. When the reaction temperature is equal to or lower than the upper limit value described above, the resulting polycarbonate diol composition can be more effectively prevented from being stained.

The reaction pressure of the transesterification reaction is not particularly limited and is preferably atmospheric pressure or higher and 1 MPa or lower. When the reaction pressure falls within the range described above, the reaction can be more conveniently carried out. In the case of using an auxiliary material, the transesterification reaction can be more efficiently accelerated at a pressure increased to some extent in consideration of vapor pressure thereof, etc.

The method for controlling the hydroxy value of the polycarbonate diol composition (component (A1)) preferably involves, for example, selecting the starting material polycarbonate diol (II-1) as one having an appropriate hydroxy value, or performing the transesterification reaction in the presence of one type or two or more types of ether diols (I-1) from the viewpoint of hydroxy value adjustment.

The progression and completion of the transesterification reaction can be confirmed by GPC measurement. As the transesterification reaction progresses, a peak derived from the starting material ether diol (I-1) is decreased in height or area over time. From the disappearance of the peak, it can be confirmed that a structure derived from the ether diol (I-1) is bonded to the end or inside the polymer chain of the starting material polycarbonate diol (II-1).

In the method for producing the polycarbonate diol composition (component (A1)), for example, the step of dehydrating the starting materials used may be performed as pretreatment before the transesterification reaction described above.

In the method for producing the polycarbonate diol composition (component (A1)), for example, the step of adding the aforementioned catalyst poison for the transesterification reaction catalyst may be performed as aftertreatment after the transesterification reaction described above.

The coating material composition of the present embodiment can produce a coating film excellent in physical properties by containing the polycarbonate diol composition (component (A1)) as mentioned above.

<Component (B): isocyanate composition>

The isocyanate composition (component (B)) contained in the coating material composition of the present embodiment is not particularly limited as long as the composition works as a curing agent for the coating material composition. A composition having an isocyanate group reactive with an OH group is used. The average number of NCO functional groups of the isocyanate composition (component (B)) is preferably 2.0 or more, more preferably 2.2 or more, further preferably 2.5 or more, still further preferably 3.0 or more, particularly preferably 3.2 or more, more particularly preferably 3.5 or more. The upper limit of the average number of NCO functional groups of the isocyanate composition (component (B)) is not particularly limited and is, for example, 7.0 or less.

When the average number of NCO functional groups of the isocyanate composition (component (B)) falls within the range described above, the coating material composition of the present embodiment tends to produce a coating film much superior in physical properties. Specifically, when the coating material composition is, for example, a transparent clear coating material composition, a coating film much superior in chemical resistance, scratch resistance and moist heat resistance can be obtained. When the coating material composition is, for example, a soft-feel coating material composition containing a flatting agent, a coating film much superior in sunscreen resistance and weather resistance can be obtained.

The average number of NCO functional groups can be confirmed in accordance with a method for an average number of isocyanate functional groups described in Japanese Patent No. 6538363.

Examples of such a component (B) include, but are not particularly limited to, chain aliphatic diisocyanate, cyclic aliphatic diisocyanate, aromatic diisocyanate, and isocyanate compounds having three or more isocyanate groups, and isocyanurate-modified products and biuret-modified products of these isocyanate compounds.

Examples of the chain aliphatic diisocyanate include, but are not particularly limited to, hexamethylene diisocyanate and trimethylhexamethylene diisocyanate.

Examples of the cyclic aliphatic diisocyanate include, but are not particularly limited to, isophorone diisocyanate.

Examples of the aromatic diisocyanate include, but are not particularly limited to, tolylene diisocyanate, 4,4'-diphenylmethane diisocyanate, xylylene diisocyanate and naphthylene diisocyanate.

Examples of the isocyanate compound having three or more isocyanate groups include, but are not particularly limited to, triphenylmethane-4,4'-4''-triisocyanate, 1,3,5-triisocyanatobenzene, 2,4,6-triisocyanatotoluene and 4,4'-dimethyldiphenylmethane-2,2',5,5'-tetraisocyanate.

A commercially available product may be used as the isocyanate compound, or the isocyanate compound may be synthesized by use of a method known in the art.

Examples of the commercially available product of the isocyanate compound include "Duranate (trade name)" series manufactured by Asahi Kasei Corp., such as 24A-100, 22A-75P, TPA-100, TKA-100, P301-75E, D101, D201, 21S-75E, MFA-75B, MHG-80B, TUL-100, TLA-100, TSA-100, TSS-100, TSE-100, E402-80B, E405-80B, AE700-100, A201H, 17B-60P, TPA-B80E, MF-B60B, MF-K60B, SBB-70P, SBN-70D, E402-B80B, WB40-100, WT30-100, WT31-100, WB40-80D, WT20-100, WL70-100, WE50-100, WM44-L70G, and WT36-72PB.

The coating material composition of the present embodiment containing the isocyanate composition (component (B)) as mentioned above can be completely cured in the short time as mentioned above (no finger mark is left in finger touch evaluation described in Examples mentioned later) in drying after painting of the coating material composition, and can thus produce a coating film excellent in physical properties.

In the coating material composition of the present embodiment, the content of the isocyanate composition (component (B)) can be appropriately adjusted according to the molar quantity of a hydroxy group contained in the base agent polyol composition (component (A)).

Specifically, the ratio of the mole number of an isocyanate group contained in the isocyanate composition (component (B)) to the mole number of a hydroxy group contained in the polyol composition (component (A)) (hereinafter, also referred to as "the mole number of the NCO group / the mole number of the OH group") can be, for example, 0.3 or more and 7.0 or less, can be, for example, 0.5 or more and 5.0 or less, can be, for example, 0.8 or more and 3.0 or less, can be 0.8 or more and 2.5 or less, or can be 0.8 or more and 2.0 or less.

When the mole number of the NCO group / the mole number of the OH group is equal to or more than the lower limit value described above, a stronger coating film tends to be obtained. On the other hand, when the mole number of the NCO group / the mole number of the OH group is equal to or less than the upper limit value described above, the chemical resistance of a coating film tends to be better.

<Component (C): solvent>

The coating material composition of the present embodiment may contain a solvent (component (C)) in addition to the component (A) and the component (B). The solvent can be any solvent that works, and water or an organic solvent is used according to a coating material system.

Specific examples of the organic solvent include, but are not particularly limited to, amide solvents, sulfoxide solvents, ketone solvents, ether solvents, ester solvents, carbonic acid ester solvents, and aromatic hydrocarbon solvents.

Examples of the amide solvent include, but are not particularly limited to, dimethylformamide, diethylformamide, dimethylacetamide, and N-methylpyrrolidone.

Examples of the sulfoxide solvent include, but are not particularly limited to, dimethyl sulfoxide.

Examples of the ketone solvent include, but are not particularly limited to, methyl ethyl ketone, methyl isobutyl ketone, diisobutyl ketone, and cyclohexanone.

Examples of the ether solvent include, but are not particularly limited to, tetrahydrofuran and dioxane.

Examples of the ester solvent include, but are not particularly limited to, methyl acetate, ethyl acetate, butyl acetate, isobutyl acetate, and propylene glycol 1-monomethyl ether 2-acetate.

Examples of the carbonic acid ester solvent include, but are not particularly limited to, dimethyl carbonate, diethyl carbonate, and propylene carbonate.

Examples of the aromatic hydrocarbon solvent include, but are not particularly limited to, toluene and xylene.

These organic solvents may be used alone or may be used as a mixed solvent of two or more thereof.

Among others, the solvent contained in the coating material composition of the present embodiment is preferably one or more members selected from the group consisting of water, dimethylformamide, dimethylacetamide, N-methylpyrrolidone, methyl ethyl ketone, methyl isobutyl ketone, diisobutyl ketone, methyl acetate, ethyl acetate, butyl acetate, isobutyl acetate, propylene glycol 1-monomethyl ether 2-acetate, toluene, and xylene.

The content of the solvent (component (C)) in the coating material composition of the present embodiment can be, for example, 10% by mass or more and 90% by mass or less, can be, for example, 15% by mass or more and 70% by mass or less, or can be, for example, 20% by mass or more and 50% by mass or less, based on the total mass of the coating material composition.

The coating material composition of the present embodiment is preferably a solvent-based coating material

composition containing the organic solvent mentioned above.

The coating material composition of the present embodiment is preferably an aqueous coating material composition containing water as the solvent.

Alternatively, the coating material composition of the present embodiment may be a solvent-free coating material composition containing no solvent.

<Component (D): other additives>

The coating material composition of the present embodiment may contain other additives (component (D)) such as a curing accelerator (catalyst), urethane beads, a flatting agent, a leveling agent, and a thixotropic agent according to various purposes, in addition to the component (A), the component (B), and the component (C). Appropriate containment of these other additives (component (D)) can produce coating material compositions differing in properties, such as a soft-feel coating material and a clear coating material.

Examples of the curing accelerator (catalyst) include, but are not particularly limited to, ones generally used such as monoamine, diamine, triamine, cyclic amine, alcohol amine, ether amine, and metal catalysts.

Examples of the monoamine include, but are not particularly limited to, triethylamine and N,N-dimethylcyclohexylamine.

Examples of the diamine include, but are not particularly limited to, tetramethylethylenediamine.

Examples of the alcohol amine include, but are not particularly limited to, dimethylethanolamine.

Examples of the metal catalyst include, but are not particularly limited to, potassium acetate, potassium 2-ethylhexanoate, calcium acetate, lead octylate, dibutyltin dilaurate, tin octylate, bismuth neodecanoate, bismuth oxycarbonate, bismuth 2-ethylhexanoate, zinc octylate, zinc neodecanoate, phosphine, and phosphorine.

Examples of the flatting agent include, but are not particularly limited to, organic fine powders and inorganic fine powders. One of these flatting agents may be used alone, or two or more thereof may be used in combination.

Examples of the organic fine powder include, but are not particularly limited to, cross-linked acrylic resins obtained by polymerization using an unsaturated carboxylic acid alkyl ester monomer and a cross-linking agent, and cross-linked resins obtained by polymerization using an unsaturated nitrile monomer, an aromatic vinyl monomer, and a cross-linking agent.

Examples of the unsaturated carboxylic acid alkyl ester monomer include, but are not particularly limited to, methyl methacrylate, methyl acrylate, ethyl acrylate, and butyl acrylate.

Examples of the unsaturated nitrile monomer include, but are not particularly limited to, acrylonitrile, methacrylonitrile, and ethacrylonitrile.

Examples of the aromatic vinyl monomer include, but are not particularly limited to, styrene and $\alpha$-methylstyrene.

One of these organic fine powders may be used alone, or two or more thereof may be used in combination.

Examples of the inorganic fine powder include, but are not particularly limited to, metal oxide fine powders, silicic acid compound fine powders, carbonic acid metal salt fine powders, nitride fine powders, gypsum fine powders, clay fine powders, talc fine powders, and natural mica fine powders.

Examples of the metal oxide fine powder include, but are not particularly limited to, silicon oxide fine powders, titanium oxide fine powders, aluminum oxide fine powders, and zirconium oxide fine powders.

Examples of the silicic acid compound fine powder include, but are not particularly limited to, aluminum silicate fine powders and magnesium silicate fine powders.

Examples of the carbonic acid metal salt fine powder include, but are not particularly limited to, calcium carbonate fine powders and barium carbonate fine powders.

Examples of the nitride fine powder include, but are not particularly limited to, titanium nitride fine powders and silicon nitride fine powders.

One of these inorganic fine powders may be used alone, or two or more thereof may be used in combination.

Among others, the inorganic fine powder is preferably a silicon oxide fine powder. Examples of the silicon oxide fine powder include hydrous or anhydrous silica fine powders.

Specific examples of such a silica fine powder include, but are not particularly limited to, "ACEMATT OK 412 (trade name)", "ACEMATT OK 607 (trade name)", "ACEMATT OK 900 (trade name)", "ACEMATT TS 100 (trade name)", "ACEMATT OK 520 (trade name)", "ACEMATT 3600 (trade name)", and "ACEMATT 3300 (trade name)" manufactured by Evonik Industries AG.

Examples of the leveling agent include, but are not particularly limited to, silicone, aerosol, wax, stearate, and polysiloxane such as BYK-331 (manufactured by BYK Additives & Instruments).

A conventional thixotropic agent for use in thermosetting resin compositions for cream solder can be used as the thixotropic agent. Specific examples of the thixotropic agent include, but are not particularly limited to, castor oil, hydrogenated castor oil, and sorbitol thixotropic agents.

The content of the other additives (component (D)) in the coating material composition of the present embodiment

can be appropriately adjusted according to the type of each additive.

<Coating film>

The coating film of the present embodiment is obtained from the coating material composition mentioned above. The coating film of the present embodiment is obtained from the coating material composition mentioned above and is therefore excellent in various physical properties.

<Purpose>

The coating material composition of the present embodiment can be suitably used in a wide range of fields such as painting of a coating material for automobiles, buses, rail vehicles, building site equipment, agricultural machines, floors, walls or roofs of architectures, metal products, mortar or concrete products, wood products, plastic products, and ceramics construction materials such as calcium silicate boards or plaster boards, etc.

Examples

Hereinafter, the present embodiment will be described further specifically with reference to specific Examples and Comparative Examples. However, the present embodiment is not limited by these Examples and Comparative Examples by any means without departing from the spirit of the present invention. In the present Examples, the terms "parts" and "%" are based on mass, unless otherwise specified.

The measurement and evaluation, etc. of physical properties in Examples and Comparative Examples mentioned later were performed by the following methods.

[Hydroxy value]

The hydroxy value was measured by the following method.

First, a volumetric flask was used, and pyridine was added to 12.5 g of acetic anhydride so as to bring the amount to 50 mL, to prepare an acetylation reagent. Subsequently, in a 100 mL eggplant-shaped flask, 1.0 to 10.0 g of a sample was weighed. Subsequently, to the eggplant-shaped flask, 5 mL of the acetylation reagent and 10 mL of toluene were added with a whole pipette. Then, a condenser was attached to the flask, and the solution in the eggplant-shaped flask was stirred and heated at 100°C for 1 hour. Subsequently, to the eggplant-shaped flask, 2.5 mL of distilled water was added with a whole pipette, and then, the solution in the eggplant-shaped flask was further heated and stirred for 10 minutes. After cooling of the solution in the eggplant-shaped flask for 2 to 3 minutes, to the eggplant-shaped flask, 12.5 mL of ethanol was added. Subsequently, to the eggplant-shaped flask, 2 to 3 drops of phenolphthalein were added as an indicator, followed by titration with 0.5 mol/L ethanolic potassium hydroxide. Subsequently, in a 100 mL eggplant-shaped flask, 5 mL of the acetylation reagent, 10 mL of toluene and 2.5 mL of distilled water were placed, and the solution in the eggplant-shaped flask was heated and stirred for 10 minutes, followed by titration in the same way as above (blank test). On the basis of the results, the hydroxy value was calculated according to the following expression (i):

$$\text{Hydroxy value (mg-KOH/g)} = \{(F - E) \times 28.05 \times f\} / G \quad \ldots \text{(i)}$$

In the expression (i), E represents the amount of the sample titrated (mL); F represents the amount titrated (mL) in the blank test; G represents the mass of the sample (g); and f represents the factor of the titration solution.

<Method for producing polyurethane coating film>

[Application step]

A coating material composition obtained in each of Examples and Comparative Examples mentioned later was used, and applied onto a polycarbonate plate ("Takiron PC-1600" (trade name), 2 mm × 70 mm × 150 mm) such that the dry film thickness was a thickness of 40 μm.

[Drying step]

The applied coating material composition was baked at 60°C and thereby dried until any finger mark was no longer left on the surface, to obtain a polyurethane coating film.

[Finger touch evaluation]

In the above-described method for producing a polyurethane coating film, the baking time (drying time) until any finger mark was no longer left on the surface was measured after the application step.

[Chemical resistance]

After baking until any finger mark was no longer left by the finger touch evaluation, the obtained coating film was cured at 23°C in a 50% RH atmosphere for 1 day. On the coating film thus cured, a cotton ball of 10 mm in diameter impregnated with each solvent (ethanol (EtOH), methyl ethyl ketone (MEK), xylene, and oleic acid) was placed for 1 minute, and the appearance of the coating film was observed after removal of the solvent remaining on the surface. The chemical resistance was determined by the following method.
○ : Transparent and not depressed
Δ : Slightly white turbid, or slightly depressed
×: White turbid, or depressed

[Moist heat resistance]

After baking until any finger mark was no longer left by the finger touch evaluation, the obtained coating film was cured at 23°C in a 50% RH atmosphere for 1 day. The coating film thus cured was heated under conditions involving a temperature of 85°C and a humidity of 85% for 10 days in a thermo-hygrostat manufactured by ESPEC Corp. under product name of "PL-1J". The coating film thus heated was incised using a cutter knife in accordance with the cross-cut method of JIS K5600-5-6: 1999 such that 100 grid-like cuts were formed (1 mm × 1 mm, each) in the coating film. Then, cellophane tape was attached to the incised coating film surface and peeled off, and the number of remaining grids was measured. From the measured number of grids, adhesion was evaluated on the basis of the following criteria.

(Evaluation Criteria)

◎: The number of grids was 90 or more.
○ : The number of grids was 80 or more and less than 90.
Δ : The number of grids was 70 or more and less than 80.
×: The number of grids was less than 70 or impossible to evaluate.

[Weather resistance]

After baking until any finger mark was no longer left by the finger touch evaluation, the obtained coating film was cured at 23°C in a 50% RH atmosphere for 1 day. The coating film thus cured was subjected to a weather resistance test for 250 hours using DPWL-5R manufactured by Suga Test Instruments Co., Ltd. (black panel temperature: 60°C, irradiance: 30 $W/m^2$, cycle conditions: irradiation at 60°C for 4 hours and wetting at 40°C for 4 hours, ultraviolet fluorescent lamp: SUGA-FS-40). The coating film thus tested was observed in accordance with the pencil hardness method of JIS K5600-5-6: 1999 for the presence or absence of a pencil scratch mark remaining on the coating film using a 6B pencil.

(Evaluation Criteria)

◎: No scratch mark was observed.
○ : A faint scratch mark was left, but disappeared by tracing with a finger.
Δ : A faint scratch mark was observed and did not disappear by tracing with a finger.
×: A clear scratch mark was observed, or separation of the coating film was observed.

[Sunscreen resistance]

After baking until any finger mark was no longer left by the finger touch evaluation, the obtained coating film was cured at 23°C in a 50% RH atmosphere for 1 day. Onto the coating film thus cured, a sunscreen agent (Neutrogena

Ultra Sheer DRY-TOUCH SUNSCREEN Broad Spectrum SPF 45) was applied at 2 g/4 $cm^2$, heated at 55°C for 1 hour. Then, the surface of the coating film was thoroughly washed with a small amount of a neutral detergent to remove the sunscreen agent. The coating film was dried at 23°C in a 50% RH atmosphere on a horizontal table and then visually evaluated for the absence of remnants of the sunscreen or abnormalities such as swelling or peeling of the coating film.

(Evaluation Criteria)

○: The appearance of the coating film was not changed.
Δ : The appearance of the coating film was slightly changed.
×: The appearance of the coating film was changed to have swelling and/or remnants.

[Scratch resistance]

After baking until any finger mark was no longer left by the finger touch evaluation, the obtained coating film was cured at 23°C in a 50% RH atmosphere for 1 day. The coating film thus cured was used, and scratched by travelling a brass brush (standard type, 3 rows, manufactured by AS ONE Corp.) installed in RUBBING TESTER (manufactured by Taihei Rika Kogyo Co., Ltd.) back and force 20 times under 745 g load on the coating film. The gloss (X1) of the coating film immediately after scratching was measured using a variable angle glossmeter (UGV-6P, manufactured by Suga Test Instruments Co., Ltd.) with an acceptance angle set to 60 degrees and an incident angle set to 60 degrees.

An initial gloss at the same location before the scratch resistance test was defined as X0. Gloss retention was calculated according to the following expression (ii):

$$\text{Gloss retention (\%)} = (X1 / X0) \times 100 \quad \text{... (ii)}$$

Subsequently, from the obtained gloss retention, scratch resistance was evaluated on the basis of the evaluation criteria given below. A coating film having a haze value of 1.0 or more was regarded as being impossible to evaluate because reproducible evaluation is difficult. The haze value can be measured with a haze meter (manufactured by Suga Test Instruments Co., Ltd., HMG-2DP).

(Evaluation Criteria)

◎: The gloss retention was 95% or more.
○ : The gloss retention was 85% or more and less than 95%.
Δ : The gloss retention was 75% or more and less than 85%.
×: The gloss retention was less than 75% or impossible to evaluate.

[Polymerization Example 1 for polycarbonate diol]

A 3 L glass flask (hereinafter, also referred to as a "reactor") equipped with a rectifying column packed with a regular packing material, and a stirring apparatus was charged with 550 g of 2-methyl-1,3-propanediol, 423 g of 1,4-butanediol, and 952 g of ethylene carbonate. Then, 0.1925 g of titanium tetra-n-butoxide was placed therein as a catalyst. While a portion of the distillate was extracted, the mixture was reacted at a reaction temperature of 150 to 165°C for 25 hours. Subsequently, the reactor was connected directly to a condenser. The reaction temperature was raised to 170 to 180°C. Then, the pressure was gradually lowered. While the hydroxy value of the formed polycarbonate diol was measuring by appropriate sampling, the diol component in the reactor was distilled off to obtain polycarbonate diol (570 g) having a hydroxy value of 53.1 mg-KOH/g. To the obtained polycarbonate diol (570 g), 0.178 g of dibutyl phosphate was added, and the mixture was stirred at 115°C for 3 hours to obtain polycarbonate diol composition PC-1.

[Polymerization Example 2 for polycarbonate diol]

A 1 L glass flask (hereinafter, also referred to as a "reactor") equipped with a rectifying column packed with a regular packing material, and a stirring apparatus was charged with 234 g of 1,4-butanediol, 236 g of 1,6-hexanediol, and 396 g of ethylene carbonate. Then, 0.092 g of titanium tetra-n-butoxide was placed therein as a catalyst. While a portion of the distillate was extracted, the mixture was reacted at a reaction temperature of 150 to 165°C for 20 hours. Subsequently, the reactor was connected directly to a condenser. The reaction temperature was raised to 170 to 180°C. Then, the pressure was gradually lowered. While the hydroxy value of the formed polycarbonate diol was measuring by

appropriate sampling, the diol component in the reactor was distilled off to obtain polycarbonate diol (346 g) having a hydroxy value of 56.0 mg-KOH/g. To the obtained polycarbonate diol (346 g), 0.085 g of dibutyl phosphate was added, and the mixture was stirred at 115°C for 3 hours to obtain polycarbonate diol composition PC-2.

[Polymerization Example 3 for polycarbonate diol]

A 1 L glass flask (hereinafter, also referred to as a "reactor") equipped with a rectifying column packed with a regular packing material, and a stirring apparatus was charged with 234 g of 1,4-butanediol, 236 g of 1,6-hexanediol, and 396 g of ethylene carbonate. Then, 0.086 g of titanium tetra-n-butoxide was placed therein as a catalyst. While a portion of the distillate was extracted, the mixture was reacted at a reaction temperature of 150 to 165°C for 20 hours. Subsequently, the reactor was connected directly to a condenser. The reaction temperature was raised to 170 to 180°C. Then, the pressure was gradually lowered. While the hydroxy value of the formed polycarbonate diol was measuring by appropriate sampling, the diol component in the reactor was distilled off to obtain polycarbonate diol (350 g) having a hydroxy value of 55.8 mg-KOH/g. To the obtained polycarbonate diol (360 g), 40 g of polyoxyethylene diol (manufactured by Wako Pure Chemical Industries, Ltd., "polyethylene glycol 1000" (trade name), number-average molecular weight: approximately 1000, hydroxy value: approximately 56.1 mg-KOH/g) was added, and the mixture was stirred at 150°C for 6 hours. Then, the reaction temperature was decreased to 115°C. 0.080 g of dibutyl phosphate was added thereto, and the mixture was stirred at 115°C for 3 hours to obtain polycarbonate diol composition PC-3 having a hydroxy value of 61.1 mg-KOH/g.

[Polymerization Example 4 for polycarbonate diol]

A 2 L glass flask (hereinafter, also referred to as a "reactor") equipped with a rectifying column packed with a regular packing material, and a stirring apparatus was charged with 458 g of 1,5-pentanediol, 500 g of 1,6-hexanediol, and 760 g of ethylene carbonate. Then, 0.086 g of titanium tetra-n-butoxide was placed therein as a catalyst. While a portion of the distillate was extracted, the mixture was reacted at a reaction temperature of 160 to 175°C for 12 hours. Subsequently, the reactor was connected directly to a condenser. The reaction temperature was raised to 175 to 190°C. Then, the pressure was gradually lowered. While the hydroxy value of the formed polycarbonate diol was measuring by appropriate sampling, the diol component in the reactor was distilled off to obtain polycarbonate diol (855 g) having a hydroxy value of 108.8 mg-KOH/g. To the obtained polycarbonate diol (855 g), 95 g of polyoxyethylene diol (manufactured by Wako Pure Chemical Industries, Ltd., "polyethylene glycol 1000" (trade name)) was added, and the mixture was stirred at 150°C for 6 hours. Then, the reaction temperature was decreased to 115°C. 0.058 g of 85% phosphoric acid was added thereto, and the mixture was stirred at 115°C for 3 hours to obtain polycarbonate diol composition PC-4 having a hydroxy value of 110.1 mg-KOH/g.

[Polymerization Example 5 for polycarbonate diol]

A 1 L glass flask (hereinafter, also referred to as a "reactor") equipped with a rectifying column packed with a regular packing material, and a stirring apparatus was charged with 330 g of 1,4-butanediol, 130 g of 1,6-hexanediol, and 415 g of ethylene carbonate. Then, 0.093 g of titanium tetra-n-butoxide was placed therein as a catalyst. While a portion of the distillate was extracted, the mixture was reacted at a reaction temperature of 155 to 165°C for 18 hours. Subsequently, the reactor was connected directly to a condenser. The reaction temperature was raised to 165 to 180°C. Then, the pressure was gradually lowered. While the hydroxy value of the formed polycarbonate diol was measuring by appropriate sampling, the diol component in the reactor was distilled off to obtain polycarbonate diol (324 g) having a hydroxy value of 109.1 mg-KOH/g. To the obtained polycarbonate diol (324 g), 36 g of polyoxyethylene diol (manufactured by Wako Pure Chemical Industries, Ltd., "polyethylene glycol 1000" (trade name)) was added, and the mixture was stirred at 150°C for 6 hours. Then, the reaction temperature was decreased to 115°C. 0.115 g of dibutyl phosphate was added thereto, and the mixture was stirred at 115°C for 3 hours to obtain polycarbonate diol composition PC-5 having a hydroxy value of 109.2 mg-KOH/g.

[Polymerization Example 6 for polycarbonate diol]

A1L glass flask (hereinafter, also referred to as a "reactor") equipped with a rectifying column packed with a regular packing material, and a stirring apparatus was charged with 234 g of 1,4-butanediol, 236 g of 1,6-hexanediol, and 396 g of ethylene carbonate. Then, 0.090 g of titanium tetra-n-butoxide was placed therein as a catalyst. While a portion of the distillate was extracted, the mixture was reacted at a reaction temperature of 150 to 165°C for 20 hours. Subsequently, the reactor was connected directly to a condenser. The reaction temperature was raised to 170 to 180°C. Then, the pressure was gradually lowered. While the hydroxy value of the formed polycarbonate diol was measuring by

appropriate sampling, the diol component in the reactor was distilled off to obtain polycarbonate diol (350 g) having a hydroxy value of 55.8 mg-KOH/g. To the obtained polycarbonate diol (210 g), 90 g of Newpol PE-61 (trade name) (manufactured by Sanyo Chemical Industries, Ltd., oxyethylene group/oxy-1-methylethylene group = 11/89% by mass, number-average molecular weight: approximately 2000, hydroxy value: approximately 56.1 mg-KOH/g) was added, and the mixture was stirred at 150°C for 10 hours. Then, the reaction temperature was decreased to 115°C. 0.086 g of dibutyl phosphate was added thereto, and the mixture was stirred at 115°C for 3 hours to obtain polycarbonate diol composition PC-6 having a hydroxy value of 55.9 mg-KOH/g.

[Polymerization Example 1 for polyisocyanate composition: PI-1]

Isocyanate composition PI-1 having an isocyanate group mass concentration % (hereinafter, also referred to as "NCO%") of 23.1 and an average number of NCO functional groups of 3.3 was obtained by synthesis in accordance with Example 1 of Japanese Patent No. 5183206.

[Polymerization Example 2 for polyisocyanate composition: PI-2]

Isocyanate composition PI-2 having NCO% of 20.1 and an average number of NCO functional groups of 4.3 was obtained by synthesis in accordance with Production Example 1 of Japanese Patent No. 6538363.

[Polymerization Example 3 for polyisocyanate composition: PI-3]

Isocyanate composition PI-3 having NCO% of 15.6 and an average number of NCO functional groups of 3.9 was obtained by synthesis in accordance with Example 1 of Japanese Patent No. 6538363.

<Production of solvent-based clear coating material composition>

[Example 1] Production of coating material composition 1

"Duranol T5652 (polycarbonate diol, number-average molecular weight: approximately 2000, hydroxy value: 56.1 mg-KOH/g, composition: 1,5-pentanediol/1,6-hexanediol = 50% by mol/50% by mol)" (trade name) manufactured by Asahi Kasei Corp. was used as a base agent, and PI-1 was used as a curing agent. The base agent and the curing agent were weighed into a plastic container such that the ratio between the mole number of a hydroxy group (OH group) contained in the base agent and the mole number of an isocyanate group (NCO group) contained in the curing agent (hereinafter, also referred to as the "NCO/OH ratio") was 1.5. 0.3% of "BYK-331" (trade name) manufactured by BYK Additives & Instruments as a leveling agent and 250 ppm of dibutyltin dilaurate as a catalyst were added based on the total mass of the base agent and the curing agent. Butyl acetate was added as a solvent such that the solid content of the finally obtained coating material composition was 42%. The mixture was stirred until uniform using a stirrer to obtain coating material composition 1. The obtained coating material composition was evaluated (finger touch evaluation, chemical resistance, scratch resistance, and moist heat resistance) on the basis of the methods described above. The evaluation results are shown in Table 1.

[Example 2] Production of coating material composition 2

Coating material composition 2 was obtained by use of the same method as in Example 1 except that PI-2 was used instead of PI-1 as a curing agent. The obtained coating material composition was evaluated (finger touch evaluation, chemical resistance, scratch resistance, and moist heat resistance) on the basis of the methods described above. The evaluation results are shown in Table 1.

[Examples 3 to 6] Production of coating material compositions 3 to 6

Coating material compositions 3 to 6 were obtained by use of the same method as in Example 2 except that PC-1 to PC-3 and PC-6 were used instead of Duranol T5652 as a base agent. The obtained coating material compositions were evaluated (finger touch evaluation, chemical resistance, scratch resistance, and moist heat resistance) on the basis of the methods described above. The evaluation results are shown in Table 1.

[Example 7] Production of coating material composition 7

Coating material composition 7 was obtained by use of the same method as in Example 2 except that "Setalux

1152" (trade name) manufactured by Allnex Netherlands B.V. (acrylic polyol, hydroxy value: 138.6 mg-KOH/g resin, solid content: 61% by mass) was used instead of Duranol T5652 as a base agent. The obtained coating material composition was evaluated (finger touch evaluation, chemical resistance, scratch resistance, and moist heat resistance) on the basis of the methods described above. The evaluation results are shown in Table 1.

[Example 8] Production of coating material composition 8

Coating material composition 8 was obtained by use of the same method as in Example 2 except that 70% by mass of "Setalux 1152" (trade name) manufactured by Allnex Netherlands B.V. and 30% by mass of "Duranol T5651 (polycarbonate diol, number-average molecular weight: approximately 1000, hydroxy value: 110.5 mg-KOH/g, composition: 1,5-pentanediol/1,6-hexanediol = 50% by mol/50% by mol)" (trade name) manufactured by Asahi Kasei Corp. in terms of a resin ratio were used instead of Duranol T5652 as a base agent. The obtained coating material composition was evaluated (finger touch evaluation, chemical resistance, scratch resistance, and moist heat resistance) on the basis of the methods described above. The evaluation results are shown in Table 1.

[Table 1]

| | | Example 1 | Example 2 | Example 3 | Example 4 | Example 5 | Example 6 | Example 7 | Example 8 |
|---|---|---|---|---|---|---|---|---|---|
| | | Coating material composition 1 | Coating material composition 2 | Coating material composition 3 | Coating material composition 4 | Coating material composition 5 | Coating material composition 6 | Coating material composition 7 | Coating material composition 8 |
| Polyol composition (base agent) | | T5652 | T5652 | PC-1 | PC-2 | PC-3 | PC-6 | Setalux1152 | Setalux1152/ T5651 =70/30% by mass |
| Isocyanate composition (curing agent) | | PI-1 | PI-2 | PI-2 | PI-2 | PI-2 | PI-2 | PI-2 | PI-2 |
| Finger touch evaluation | Drying time | 45 min | 30 min | 30 min | 30 min | 30 min | 30 min | 20 min | 30 min |
| Chemical resistance | EtOH | ○ | ○ | ○ | ○ | ○ | ○ | ○ | ○ |
| | MEK | Δ | ○ | ○ | ○ | ○ | ○ | ○ | ○ |
| | Xylene | Δ | ○ | ○ | ○ | ○ | ○ | ○ | ○ |
| | Oleic acid | ○ | ○ | ○ | ○ | ○ | ○ | ○ | ○ |
| Scratch resistance | Gloss retention | ○ | ◎ | ◎ | ◎ | ◎ | ◎ | ◎ | ◎ |
| Moist heat resistance | Adhesion | ○ | ◎ | ◎ | ◎ | ◎ | ◎ | ◎ | ◎ |

[Comparative Examples 1 to 6] Production of coating material compositions 9 to 14

Coating material compositions 9 to 14 were obtained by use of the same methods as in Examples 1 to 6 except that the amount of the catalyst was changed from 250 ppm to 25 ppm. The obtained coating material compositions were evaluated (finger touch evaluation, chemical resistance, scratch resistance, and moist heat resistance) on the basis of the methods described above. The evaluation results are shown in Table 2.

[Comparative Examples 7 and 8] Production of coating material compositions 15 and 16

Coating material compositions 15 and 16 were obtained by use of the same methods as in Examples 7 and 8 except that the amount of the catalyst was changed from 250 ppm to 0 ppm. The obtained coating material compositions were evaluated (finger touch evaluation, chemical resistance, scratch resistance, and moist heat resistance) on the basis of the methods described above. The evaluation results are shown in Table 2.

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| | | Coating material composition 9 | Coating material composition 10 | Coating material composition 11 | Coating material composition 12 | Coating material composition 13 | Coating material composition 14 | Coating material composition 15 | Coating material composition 16 |
| Polyol composition (base agent) | | T5652 | T5652 | PC-1 | PC-2 | PC-3 | PC-6 | Setalux1152 | Setalux1152/ T5651 =70/30% by mass |
| Isocyanate composition (curing agent) | | PI-1 | PI-2 | PI-2 | PI-2 | PI-2 | PI-2 | PI-2 | PI-2 |
| Finger touch evaluation | Drying time | 100 min | 70 min | 70 min | 70 min | 70 min | 70 min | 70 min | 90 min |
| Chemical resistance | EtOH | × | Δ | Δ | Δ | Δ | Δ | Δ | Δ |
| | MEK | × | × | × | × | × | × | × | × |
| | Xylene | × | × | × | × | × | × | × | × |
| | Oleic acid | Δ | Δ | Δ | Δ | Δ | Δ | Δ | Δ |
| Scratch resistance | Gloss retention | × | Δ | Δ | Δ | Δ | Δ | × | × |
| Moist heat resistance | Adhesion | × | Δ | Δ | Δ | Δ | × | Δ | × |

<Production of solvent-based soft-feel coating material composition>

[Example 9] Production of coating material composition 17

"Duranol T5652" (trade name) manufactured by Asahi Kasei Corp. was used as a base agent, and PI-1 was used as a curing agent. The base agent and the curing agent were weighed into a plastic container such that the NCO/OH ratio was 1.5. 0.3% of "BYK-331" (trade name) manufactured by BYK Additives & Instruments as a leveling agent, 10.0% of "ACEMATT TS 100" (trade name) manufactured by Evonik Industries AG as a flatting agent, and 2000 ppm of dibutyltin dilaurate as a catalyst were added based on the total mass of the base agent and the curing agent. Butyl acetate was added as a solvent such that the solid content of the finally obtained coating material composition was 40%. The mixture was stirred until uniform using a stirrer to obtain coating material composition 17. The obtained coating material composition was evaluated (finger touch evaluation, sunscreen resistance, and weather resistance) on the basis of the methods described above. The evaluation results are shown in Table 3.

[Example 10] Production of coating material composition 18

Coating material composition 18 was obtained by use of the same method as in Example 9 except that PI-2 was used instead of PI-1 as a curing agent. The obtained coating material composition was evaluated (finger touch evaluation, sunscreen resistance, and weather resistance) on the basis of the methods described above. The evaluation results are shown in Table 3.

[Examples 11 to 14] Production of coating material compositions 19 to 22

Coating material compositions 19 to 22 were obtained by use of the same method as in Example 10 except that PC-1 to PC-3 and PC-6 were used instead of Duranol T5652 as a base agent. The obtained coating material compositions were evaluated (finger touch evaluation, sunscreen resistance, and weather resistance) on the basis of the methods described above. The evaluation results are shown in Table 3.

[Table 3]

| | | Example 9 | Example 10 | Example 11 | Example 12 | Example 13 | Example 14 |
|---|---|---|---|---|---|---|---|
| | | Coating material composition 17 | Coating material composition 18 | Coating material composition 19 | Coating material composition 20 | Coating material composition 21 | Coating material composition 22 |
| Polyol composition (base agent) | | T5652 | T5652 | PC-1 | PC-2 | PC-3 | PC-6 |
| Isocyanate composition (curing agent) | | PI-1 | PI-2 | PI-2 | PI-2 | PI-2 | PI-2 |
| Fingertouch evaluation | Drying time | 45 min | 30 min | 30 min | 30 min | 30 min | 30 min |
| Sunscreen resistance | Nutrogena SPF45 | ○ | ○ | ○ | ○ | ○ | ○ |
| Weather resistance | Pencil 6B | ○ | ◎ | ◎ | ◎ | ◎ | ◎ |

[Comparative Examples 9 to 14] Production of coating material compositions 23 to 28

Coating material compositions 23 to 28 were obtained by use of the same methods as in Examples 9 to 14 except that the amount of the catalyst was changed from 2000 ppm to 500 ppm. The obtained coating material compositions were evaluated (finger touch evaluation, sunscreen resistance, and weather resistance) on the basis of the methods described above. The evaluation results are shown in Table 4.

[Table 4]

| | | Comparative Example 9 | Comparative Example 10 | Comparative Example 11 | Comparative Example 12 | Comparative Example 13 | Comparative Example 14 |
|---|---|---|---|---|---|---|---|
| | | Coating material composition 23 | Coating material composition 24 | Coating material composition 25 | Coating material composition 26 | Coating material composition 27 | Coating material composition 28 |
| Polyol composition (base agent) | | T5652 | T5652 | PC-1 | PC-2 | PC-3 | PC-6 |
| Isocyanate composition (curing agent) | | PI-1 | PI-2 | PI-2 | PI-2 | PI-2 | PI-2 |
| Finger touch evaluation | Drying time | 100 min | 70 min | 70 min | 70 min | 70 min | 70 min |
| Sunscreen resistance | Nutrogena SPF45 | × | × | × | × | × | × |
| Weather resistance | Pencil 6B | × | × | × | × | × | × |

<Production of aqueous clear coating material composition>

[Example 15] Production of coating material composition 29

PC-4 was used as a base agent, and "Duranate WT30-100 (polyisocyanate; NCO%: 16.4, average number of NCO functional groups: 3.1)" (trade name) manufactured by Asahi Kasei Corp. was used as a curing agent. The base agent and the curing agent were weighed into a plastic container such that the NCO/OH ratio was 1.5. 0.3% of "BYK-331" (trade name) manufactured by BYK Additives & Instruments as a leveling agent and 1000 ppm of "Borchers LH10" (trade name) manufactured by OMG Borchers GmbH as an aqueous catalyst were added based on the total mass of the base agent and the curing agent. Pure water was added as a solvent such that the solid content of the finally obtained coating material composition was 42%. The mixture was stirred until uniform using a stirrer to obtain coating material composition 29. The obtained coating material composition was evaluated (finger touch evaluation, chemical resistance, scratch resistance, and moist heat resistance) on the basis of the methods described above. The evaluation results are shown in Table 5.

[Example 16] Production of coating material composition 30

Coating material composition 30 was obtained by use of the same method as in Example 15 except that PI-3 was used instead of Duranate WT30-100 as a curing agent. The obtained coating material composition was evaluated (finger touch evaluation, chemical resistance, scratch resistance, and moist heat resistance) on the basis of the methods described above. The evaluation results are shown in Table 5.

[Examples 17 and 18] Production of coating material compositions 31 and 32

Coating material compositions 31 and 32 were obtained by use of the same method as in Example 16 except that PC-5 and PC-3 were used instead of PC-4 as a base agent. The obtained coating material compositions were evaluated (finger touch evaluation, chemical resistance, scratch resistance, and moist heat resistance) on the basis of the methods described above. The evaluation results are shown in Table 5.

[Example 19] Production of coating material composition 33

Coating material composition 33 was obtained by use of the same method as in Example 16 except that "Setaqua 6515" (trade name) manufactured by Allnex Netherlands B.V. (aqueous acrylic polyol, hydroxy value: 108.9 mg-KOH/g resin, solid content: 45% by mass) was used instead of PC-4 as a base agent. The obtained coating material composition was evaluated (finger touch evaluation, chemical resistance, scratch resistance, and moist heat resistance) on the basis of the methods described above. The evaluation results are shown in Table 5.

[Example 20] Production of coating material composition 34

Coating material composition 34 was obtained by use of the same method as in Example 16 except that 70% by mass of "Setaqua 6515" (trade name) manufactured by Allnex Netherlands B.V. and 30% by mass of PC-4 in terms of a resin ratio were used as a base agent. The obtained coating material composition was evaluated (finger touch evaluation, chemical resistance, scratch resistance, and moist heat resistance) on the basis of the methods described above. The evaluation results are shown in Table 5.

[Example 21] Production of coating material composition 35

Coating material composition 35 was obtained by use of the same method as in Example 16 except that "DAOTAN TW 6450/30WA" (trade name) manufactured by Daicel-Allnex Ltd. (polyurethane dispersion, hydroxy value: 30 mg-KOH/g resin, solid content: 30% by mass) was used instead of PC-4 as a base agent. The obtained coating material composition was evaluated (finger touch evaluation, chemical resistance, scratch resistance, and moist heat resistance) on the basis of the methods described above. The evaluation results are shown in Table 5.

[Table 5]

| | | Example 15 | Example 16 | Example 17 | Example 18 | Example 19 | Example 20 | Example 21 |
|---|---|---|---|---|---|---|---|---|
| | | Coating material composition 29 | Coating material composition 30 | Coating material composition 31 | Coating material composition 32 | Coating material composition 33 | Coating material composition 34 | Coating material composition 35 |
| Polyol composition (base agent) | | PC-4 | PC-4 | PC-5 | PC-3 | Setaqua6515 | Setaqua6515/ PC-4 =70/30% by mass | DAOTAN TW6450/30WA |
| Isocyanate composition (curing agent) | | WT30-100 | PI-3 | PI-3 | PI-3 | PI-3 | PI-3 | PI-3 |
| Finger touch evaluation | Drying time | 45 min | 30 min | 30 min | 30 min | 30 min | 30 min | 45 min |
| Chemical resistance | EtOH | ○ | ○ | ○ | ○ | ○ | ○ | Δ |
| | MEK | Δ | ○ | ○ | ○ | ○ | ○ | Δ |
| | Xylene | Δ | ○ | ○ | ○ | ○ | ○ | Δ |
| | Oleic acid | ○ | ○ | ○ | ○ | ○ | ○ | ○ |
| Scratch resistance | Gloss retention | ○ | ◎ | ◎ | ◎ | ◎ | ◎ | ◎ |
| Moist heat resistance | Adhesion | ○ | ◎ | ◎ | ◎ | ◎ | ◎ | ○ |

[Comparative Examples 15 to 18 and 20] Production of coating material compositions 36 to 39 and 41

Coating material compositions 36 to 39 and 41 were obtained by use of the same methods as in Examples 15 to 18 and 20 except that the amount of the aqueous catalyst was changed from 1000 ppm to 250 ppm. The obtained coating material compositions were evaluated (finger touch evaluation, chemical resistance, scratch resistance, and moist heat resistance) on the basis of the methods described above. The evaluation results are shown in Table 6.

[Comparative Example 19] Production of coating material composition 40

Coating material composition 40 was obtained by use of the same method as in Example 19 except that the amount of the aqueous catalyst was changed from 1000 ppm to 50 ppm. The obtained coating material composition was evaluated (finger touch evaluation, chemical resistance, scratch resistance, and moist heat resistance) on the basis of the methods described above. The evaluation results are shown in Table 6.

[Table 6]

| | | Comparative Example 15 | Comparative Example 16 | Comparative Example 17 | Comparative Example 18 | Comparative Example 19 | Comparative Example 20 |
|---|---|---|---|---|---|---|---|
| | | Coating material composition 36 | Coating material composition 37 | Coating material composition 38 | Coating material composition 39 | Coating material composition 40 | Coating material composition 41 |
| Polyol composition (base agent) | | PC-4 | PC-4 | PC-5 | PC-3 | Setaqua6515 | Setaqua6515/PC -4 =70/30% by mass |
| Isocyanate composition (curing agent) | | WT30-100 | PI-3 | PI-3 | PI-3 | PI-3 | PI-3 |
| Finger touch evaluation | Drying time | 120 min | 70 min | 70 min | 70 min | 70 min | 70 min |
| Chemical resistance | EtOH | × | Δ | Δ | Δ | × | Δ |
| | MEK | × | × | × | × | × | × |
| | Xylene | × | × | × | × | × | × |
| | Oleic acid | Δ | Δ | Δ | Δ | Δ | Δ |
| Scratch resistance | Gloss retention | × | Δ | Δ | Δ | Δ | × |
| Moist heat resistance | Adhesion | × | × | × | × | × | × |

<Production of aqueous soft-feel coating material composition>

[Example 22] Production of coating material composition 42

PC-4 was used as a base agent, and "Duranate WT30-100" (trade name) manufactured by Asahi Kasei Corp. was used as a curing agent. The base agent and the curing agent were weighed into a plastic container such that the NCO/OH ratio was 1.5. 0.3% of "BYK-331" (trade name) manufactured by BYK Additives & Instruments as a leveling agent, 10.0% of "ACEMATT TS 100" (trade name) manufactured by Evonik Industries AG as a flatting agent, 0.6% of "Disparlon AQ-002" (trade name) manufactured by Kusumoto Chemicals, Ltd. as an antisettling agent, and 3250 ppm of "Borchers LH10" (trade name) manufactured by OMG Borchers GmbH as an aqueous catalyst were added based on the total mass of the base agent and the curing agent. Pure water was added as a solvent such that the solid content of the finally obtained coating material composition was 40%. The mixture was stirred until uniform using a stirrer to obtain coating material composition 42. The obtained coating material composition was evaluated (finger touch evaluation, sunscreen resistance, and weather resistance) on the basis of the methods described above. The evaluation results are shown in Table 7.

[Example 23] Production of coating material composition 43

Coating material composition 43 was obtained by use of the same method as in Example 22 except that PI-3 was used instead of Duranate WT30-100 as a curing agent. The obtained coating material composition was evaluated (finger touch evaluation, sunscreen resistance, and weather resistance) on the basis of the methods described above. The evaluation results are shown in Table 7.

[Examples 24 and 25] Production of coating material compositions 44 and 45

Coating material compositions 44 and 45 were obtained by use of the same method as in Example 23 except that PC-5 and PC-3 were used instead of PC-4 as a base agent. The obtained coating material compositions were evaluated (finger touch evaluation, sunscreen resistance, and weather resistance) on the basis of the methods described above. The evaluation results are shown in Table 7.

[Table 7]

| | | Example 22 | Example 23 | Example 24 | Example 25 |
|---|---|---|---|---|---|
| | | Coating material composition 42 | Coating material composition 43 | Coating material composition 44 | Coating material composition 45 |
| Polyol composition (base agent) | | PC-4 | PC-4 | PC-5 | PC-3 |
| Isocyanate composition (curing agent) | | WT30-100 | PI-3 | PI-3 | PI-3 |
| Finger touch evaluation | Drying time | 45 min | 30 min | 30 min | 30 min |
| Sunscreen resistance | Nutrogena SPF45 | ○ | ○ | ○ | ○ |
| Weather resistance | Pencil 6B | ○ | ◎ | ◎ | ◎ |

[Comparative Examples 21 to 24] Production of coating material compositions 46 to 49

Coating material compositions 46 to 49 were obtained by use of the same methods as in Examples 22 to 25 except that the amount of the catalyst was changed from 3250 ppm to 1000 ppm. The obtained coating material compositions were evaluated (finger touch evaluation, sunscreen resistance, and weather resistance) on the basis of the methods described above. The evaluation results are shown in Table 8.

[Table 8]

| | | Comparative Example 21 | Comparative Example 22 | Comparative Example 23 | Comparative Example 24 |
|---|---|---|---|---|---|
| | | Coating material composition 46 | Coating material composition 47 | Coating material composition 48 | Coating material composition 49 |
| Polyol composition (base agent) | | PC-4 | PC-4 | PC-5 | PC-3 |
| Isocyanate composition (curing agent) | | WT30-100 | PI-3 | PI-3 | PI-3 |
| Finger touch evaluation | Drying time | 120 min | 70 min | 70 min | 70 min |
| Sunscreen resistance | Nutrogena SPF45 | × | × | × | × |
| Weather resistance | Pencil 6B | × | × | × | × |

Industrial Applicability

The coating material composition of the present invention can be suitably used in a wide range of fields such as painting of a coating material for automobiles, buses, rail vehicles, building site equipment, agricultural machines, floors, walls or roofs of architectures, metal products, mortar or concrete products, wood products, plastic products, and ceramics construction materials such as calcium silicate boards or plaster boards, etc.

## Claims

1. A method for producing a polyurethane coating film, comprising:

   a mixing step of mixing component (A): a polyol composition and component (B): an isocyanate composition to obtain a coating material composition;
   an application step of applying the coating material composition; and
   a drying step of drying the applied coating material composition to obtain a coating film, wherein
   a drying time in the drying step is within 60 minutes after the application.

2. The method for producing the polyurethane coating film according to claim 1, wherein the component (A) has a structure represented by the following (A-I):

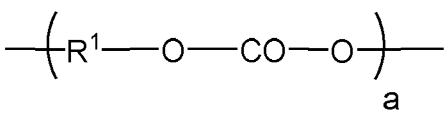

... (A-I)

   wherein $R^1$ is a divalent linear, branched or cyclic aliphatic, or aromatic hydrocarbon group having 2 or more and 20 or less carbon atoms, and a plurality of $R^1$ moieties are the same as or different from each other; and a is the number of 1 or larger and 50 or smaller.

3. The method for producing the polyurethane coating film according to claim 2, wherein the component (A) contains 50% by mass or more and 95% by mass or less of the structure represented by (A-I).

4. The method for producing the polyurethane coating film according to any one of claims 1 to 3, wherein the component (A) has a structure represented by the following general formula (I):

$$-\left(R^{11}-O\right)_{n11}- \quad \ldots \text{ (I)}$$

wherein $R^{11}$ is a divalent linear, branched or cyclic aliphatic, or aromatic hydrocarbon group having 2 or more and 20 or less carbon atoms, and a plurality of $R^{11}$ moieties are the same as or different from each other; and n11 is the number of 7 or larger and 70 or smaller.

**5.** The method for producing the polyurethane coating film according to claim 4, wherein the component (A) contains 5% by mass or more and 50% by mass or less of the structure represented by the general formula (I).

**6.** The method for producing the polyurethane coating film according to claim 4 or 5, wherein the structure represented by the general formula (I) is a polyoxyethylene structure.

**7.** The method for producing the polyurethane coating film according to claim 4 or 5, wherein based on the total mass of the structure represented by the general formula (I), a content of an oxy-1-methylethylene group is 10% by mass or more and 100% by mass or less, and a content of an oxyethylene group is 0% by mass or more and 90% by mass or less.

**8.** The method for producing the polyurethane coating film according to any one of claims 1 to 7, wherein a hydroxy value of the component (A) is 10 to 400 mg-KOH/g.

**9.** The method for producing the polyurethane coating film according to any one of claims 1 to 8, wherein an average number of NCO functional groups of the component (B) is 2.0 or more.

**10.** The method for producing the polyurethane coating film according to any one of claims 1 to 9, wherein a mole number of a hydroxy group (OH group) contained in the component (A) and a mole number of an isocyanate group (NCO group) contained in the component (B) satisfy a relationship of the following expression 1:

the mole number of the NCO group / the mole number of the OH group = 0.2 to 7.0 (expression 1).

**11.** A coating material composition comprising component (A): a polyol composition and component (B): an isocyanate composition, wherein a baking time (drying time) until any finger mark is no longer left in the following finger touch evaluation is within 60 minutes: [finger touch evaluation]
the coating material composition is used, and applied onto a polycarbonate plate (2 mm × 70 mm × 150 mm) such that a dry film thickness is a thickness of 40 μm, and the applied coating material composition is baked at 60°C to obtain a polyurethane coating film; and in this step, the baking time (drying time) until any finger mark is no longer left on the surface is measured after the application.

**12.** The coating material composition according to claim 11, wherein a mole number of a hydroxy group (OH group) contained in the component (A) and a mole number of an isocyanate group (NCO group) contained in the component (B) satisfy a relationship of the following expression 1:

the mole number of the NCO group / the mole number of the OH group = 0.2 to 7.0 (expression 1).

**13.** The coating material composition according to claim 11 or 12, wherein a hydroxy value of the component (A) is 10 to 400 mg-KOH/g.

**14.** The coating material composition according to any one of claims 11 to 13, wherein an average number of NCO functional groups of the component (B) is 2.0 or more.

**15.** The coating material composition according to any one of claims 11 to 14, wherein the component (A) contains a carbonate group.

**16.** The coating material composition according to any one of claims 11 to 15, wherein the component (A) has a structure represented by the following (A-I):

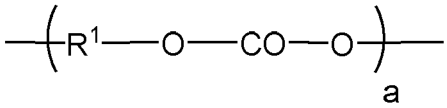

... (A-I)

wherein $R^1$ is a divalent linear, branched or cyclic aliphatic, or aromatic hydrocarbon group having 2 or more and 20 or less carbon atoms, and a plurality of $R^1$ moieties are the same as or different from each other; and a is the number of 1 or larger and 50 or smaller.

**17.** The coating material composition according to any one of claims 11 to 16, wherein the component (A) contains the following component (A1):
component (A1): a polycarbonate diol composition comprising a structure represented by the following general formula (I) and a polycarbonate structure represented by the following formula (A-I), the polycarbonate diol composition having hydroxy groups at both ends and having a hydroxy value of 10 to 400 mg-KOH/g, wherein based on the total mass of the structure represented by the following general formula (I) and the polycarbonate structure represented by the following formula (A-I), a content of the structure represented by the following general formula (I) is 5% by mass or more and 50% by mass or less, and a content of the polycarbonate structure represented by the following formula (A-I) is 50% by mass or more and 95% by mass or less:

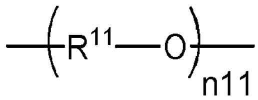

... (I)

wherein $R^{11}$ is a divalent linear, branched or cyclic aliphatic, or aromatic hydrocarbon group having 2 or more and 20 or less carbon atoms, and a plurality of $R^{11}$ moieties are the same as or different from each other; and n11 is the number of 7 or larger and 70 or smaller, and

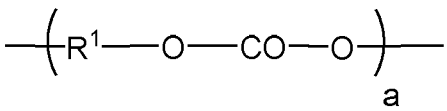

... (A-I)

wherein $R^1$ is a divalent linear, branched or cyclic aliphatic, or aromatic hydrocarbon group having 2 or more and 20 or less carbon atoms, and a plurality of $R^1$ moieties are the same as or different from each other; and a is the number of 1 or larger and 50 or smaller.

**18.** The coating material composition according to claim 17, wherein the structure represented by the general formula (I) is a polyoxyethylene structure.

**19.** The coating material composition according to claim 17, wherein based on the total mass of the structure represented by the general formula (I), a content of an oxy-1-methylethylene group is 10% by mass or more and 100% by mass or less, and a content of an oxyethylene group is 0% by mass or more and 90% by mass or less.

**20.** The coating material composition according to any one of claims 11 to 19, wherein the coating material composition is a solvent-based coating material composition.

**21.** The coating material composition according to any one of claims 11 to 19, wherein the coating material composition is an aqueous coating material composition.

**22.** The coating material composition according to any one of claims 11 to 19, wherein the coating material composition is a solvent-free coating material composition.

**23.** A coating film obtained from the coating material composition according to any one of claims 11 to 22.

Europäisches Patentamt
European Patent Office
Office européen des brevets

# EUROPEAN SEARCH REPORT

Application Number
EP 20 20 6099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/68736 A1 (AKZO NOBEL NV [NL]) 20 September 2001 (2001-09-20) * examples 16-23 * ----- | 1-23 | INV. C08G18/24 C08G18/44 C08G18/73 C09D175/06 |
| | | | TECHNICAL FIELDS SEARCHED (IPC) |
| | | | C08G C09D |

The present search report has been drawn up for all claims

3

| Place of search | Date of completion of the search | Examiner |
|---|---|---|
| Munich | 19 March 2021 | Bergmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 20 6099

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2021

| Patent document cited in search report | Publication date | Patent family member(s) | Publication date |
|---|---|---|---|
| WO 0168736 A1 | 20-09-2001 | AT 307152 T | 15-11-2005 |
| | | AU 4066601 A | 24-09-2001 |
| | | AU 2001240666 B2 | 30-06-2005 |
| | | BR 0109128 A | 03-12-2002 |
| | | CN 1416442 A | 07-05-2003 |
| | | EP 1263828 A1 | 11-12-2002 |
| | | JP 2003526722 A | 09-09-2003 |
| | | KR 20020081408 A | 26-10-2002 |
| | | US 2001047071 A1 | 29-11-2001 |
| | | WO 0168736 A1 | 20-09-2001 |
| | | ZA 200207339 B | 14-07-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 200190213 A
- WO 2009063767 A
- JP 57034107 A
- JP 61275311 A
- JP 3874664 B
- JP 6538363 B
- JP 5183206 B